# EUROPÄISCHE PATENTSCHRIFT

(11) **EP 3 987 632 B1**
(45) Veröffentlichungstag und Bekanntmachung des Hinweises auf die Patenterteilung: **14.12.2022**
(21) Anmeldenummer: 20785683.2
(22) Anmeldetag: 11.09.2020
(51) Int. Cl.: H02K 15/06, H02K 15/00

(54) **VORRICHTUNG UND VERFAHREN ZUM EINSETZEN VON LEITERSTÜCKEN IN EINEN STATOR**
DEVICE AND METHOD FOR INSERTING CONDUCTOR PIECES INTO A STATOR
DISPOSITIF ET PROCÉDÉ D'INSERTION DE PIÈCES CONDUCTRICES DANS UN STATOR

(30) Priorität: 12.09.2019 DE 102019124488
(43) Veröffentlichungstag der Anmeldung: 27.04.2022
(73) Patentinhaber: Gehring Technologies GmbH + Co. KG, 73760 Ostfildern (DE)
(72) Erfinder: ARCHETTI, Ivan, 25050 PASSI RAVO (BS) (IT); SALA, Paolo, 25080 POLPENAZZO (BS) (IT)
(74) Vertreter: DREISS Patentanwälte PartG mbB
(86) Internationale Anmeldenummer: PCT/EP2020/075531
(87) Internationale Veröffentlichungsnummer: WO 2021/048394

(56) Entgegenhaltungen:
- WO-A1-2018/233774
- DE-A1-102014 226 229
- DE-A1-102018 103 930
- IT-A1- RM20 100 395
- JP-A- H11 341 754
- US-A1- 2009 265 909
- US-A1- 2009 302 705

## Beschreibung

Die Erfindung betrifft eine Vorrichtung zur Bestückung eines Statorkerns mit Leiterstücken, sowie ein Verfahren zum Bestücken eines Statorkerns mit Leiterstücken.

Vorrichtungen und Verfahren zur Bestückung eines Statorkerns mit Leiterstücken sind im Stand der Technik bekannt. Verwendung finden Statoren in elektrodynamischen Maschinen, z. B. in Elektromotoren. Bei der Fertigung von Elektromechanischen Wandlern, insbesondere Elektromotoren, insbesondere für Traktionsantriebe, werden einzelne Wicklungselemente (Steckspulen, sog. "Hairpins") hergestellt, die im weiteren Prozess zu einer Statorwicklung weiterverarbeitet werden. Hierzu werden die einzelnen Leiterstücke bzw. Hairpins in den Statorkern eingesetzt, häufig im Statorkern noch verformt (twisting) und anschließend miteinander verschweißt, so dass die einzelnen Leiterstücke die Wicklungen des Stators bilden.

Ein Hairpin im vorliegenden Sinne ist ein Leiterstück mit 2 länglich erstreckten Schenkeln (auch Schenkelabschnitte), die über einen Verbindungsschenkel (auch Verbindungsabschnitt) verbunden sind. Hairpins sind im Wesentlichen U-förmig. Der Verbindungsschenkel kann bogenförmig aber auch abschnittsweise gerade oder stufenförmig ausgebildet sein.

Dabei ist es zielführend die Leiterstücke sehr schnell, zuverlässig und vollautomatisiert in den Stator einzusetzen. Hierzu werden die Leiterstücke, wie z. B in DE 10 2018 114 875 A1 beschrieben, zunächst in einer Hilfsvorrichtung derart angeordnet, dass ihre Anordnung und insbesondere die relative Lage zueinander, der späteren Anordnung der Leiterstücke im Statorkern entspricht. Die so ausgerichteten Leiterstücke werden dann mittels einer Greifvorrichtung aus der Hilfsvorrichtung entnommen und in den Statorkern eingesetzt. Die Leiterstücke sollen zwar möglichst schnell und vollautomatisiert aber auch möglichst exakt in den Stator eingesetzt werden.

WO 2018/233744 A1, DE 10 2014 226 229 A1, JP H11 341 754 A, IT RM20 100 395 A1 und DE 10 2018 103 930 A1 offenbaren jeweils Vorrichtungen mit Merkmalen des Anspruchs 1.

Es ist Aufgabe der vorliegenden Erfindung, eine Vorrichtung und ein Verfahren zur Verfügung zu stellen, mit denen das Einsetzen von Leiterstücken in einen Statorkern möglichst schnell und präzise durchgeführt werden kann.

Gelöst wird die Aufgabe durch eine Vorrichtung zur Bestückung eines Statorkerns mit Leiterstücken, insbesondere mit Hairpins, die insbesondere mit rechteckigem Leiterquerschnitt (die Ecken des Querschnitts können dabei abgerundet sein) ausgebildet sind, wobei die Vorrichtung umfasst:
Eine Aufnahme zur spielbehafteten Aufnahme der Leiterstücke. Mit spielbehaftet ist dabei gemeint, dass die Leiterstücke nicht fest in der Aufnahme stecken (kein Formschluss) sondern eher lose in der Aufnahme angeordnet sind, so dass der Einsetzvorgang leichtgängig durchgeführt werden kann. Die Leiterstücke sind dabei in einer Konfiguration, die einer zum Einsetzen in einen Statorkern vorgesehenen Konfiguration der Leiterstücke entspricht, in der Aufnahme angeordnet. In dieser Konfiguration (der vorgesehenen Konfiguration) sind die Leiterstücke in der Aufnahme in radial erstreckten Reihenanordnungen angeordnet. Die Vorrichtung kann weiter eine Bestückeinrichtung umfassen. Die Bestückeinrichtung ist dabei ausgebildet und angeordnet, um die Aufnahme mit Leiterstücken zu bestücken. Sie setzt also die einzelnen Leiterstücke bzw. Hairpins jeweils einzeln in die Aufnahme ein. Hierzu kann die Bestückeinrichtung, insbesondere greiferbasiert ausgebildet sein. Damit ist gemeint, dass die Bestückeinrichtung beispielsweise bewegliche Arme mit Greifern aufweisen kann, die jeweils einzelne Hairpins greifen (beispielsweise aus einem Magazin) und in die Aufnahme überführen können.

Die Aufnahme kann beispielsweise drehbar ausgestaltet sein, sodass nach dem Einsetzen einzelner Hairpins die Aufnahme rotiert wird, um Hairpins in einer anderen, in Umfangsrichtung versetzten Position mittels der Bestückeinrichtung einzusetzen. Die Aufnahme kann nach dem Einsetzten einer radial erstreckten Reihe an Hairpins bspw. um einen bestimmten Winkel gedreht werden und eine nächste radial erstreckte Reihe an Hairpins durch die Bestückeinrichtung eingesetzt werden.

Es kann auch vorgesehen sein, dass die Aufnahme nach dem Einsetzen jedes einzelnen Hairpins rotiert wird und nach einer vollständigen Drehung die nächsten Hairpins einer Reihenanordnung eingesetzt werden.

Die Aufnahme kann beim Bestücken auch unbeweglich angeordnet sein. Entsprechend kann die Bestückeinrichtung ausgebildet sein, um die einzelnen umfänglich verteilten Positionen der Aufnahme zu bestücken.

Die Vorrichtung weist weiter eine Greifvorrichtung auf. Diese Greifvorrichtung dient dazu, bzw. sie ist ausgebildet und angeordnet, um die in der Aufnahme spielbehaftet gehaltenen Leiterstücke aus dieser zu entnehmen, und in einer vorgesehenen endgültigen Anordnung in den Statorkern einzusetzen. Mit anderen Worten, die Greifvorrichtung dient dazu, die in der Aufnahme befindlichen Hairpins zu fassen und in den Statorkern zu übertragen.

Es ist denkbar, dass die Vorrichtung mehrere, z. B. zwei, Aufnahmen aufweisen kann, um Abläufe zu parallelisieren, Standzeiten der einzelnen Bestandteile der Vorrichtung zu verkürzen und dadurch den Gesamtprozess zu beschleunigen. Dabei kann eine erste Aufnahme mit einer Bestückeinrichtung bestückt werden, während eine Greifvorrichtung die Hairpins einer zweiten, bereits vollständig bestückten, Aufnahme greift.

Vorrichtung umfasst weiter eine Statorkernaufnahme. Die zur Aufnahme eines mit Leiterstücken zu bestückenden Statorkerns ausgebildet ist.

Es ist nun vorgesehen, dass die Greifvorrichtung eine Ausrichteinrichtung umfasst. Die Ausrichteinrichtung ist dabei ausgebildet, um in einem Greifvorgang mehrere in der Aufnahme spielbehaftet gehaltene und radial erstreckt angeordnete Leiterstückreihen jeweils in ihrer vorgesehenen Reihenanordnung aneinander anliegend radial erstreckt auszurichten. Die Ausrichteinrichtung dient also dazu, die Leiterstücke einer Leiterstückreihe derart zu kontaktieren, dass diese in aneinander anliegender Art und Weise in einer radial erstreckten Reihe liegen. Zuvor sind die Leiterstücke in der Aufnahme zwar bereits auch in der entsprechenden Reihe angeordnet, jedoch liegen sie nicht unbedingt aneinander an, sondern können durch die spielbehaftete Anordnung in der Aufnahme einen gewissen Abstand und/oder Versatz zueinander aufweisen. Zudem sorgt die Ausrichteinrichtung dafür, dass die Leiterstücke einer Leiterstückreihe auf einer radial erstreckten Linie liegen. Das Ausrichten kann dabei erfolgen, indem die Ausrichteinrichtung für die Leiterstücke der jeweiligen Reihenanordnung einen radialen Anschlag auf einer ersten radialen Seite bildet und weiter einen beidseitigen umfänglichen Anschlag bildet. Mit anderen Worten, die jeweilige Leiterstückreihe liegt in radialer Richtung an dem radialen Anschlag an und die einzelnen Leiterstücke der Leiterstückreihe werden umfänglich beidseitig durch die Ausrichteinrichtung kontaktiert.

Die Greifvorrichtung weist weiter eine von der Ausrichteinrichtung separat ausgebildete Gegenlagereinrichtung auf. Die Gegenlagereinrichtung ist ausgebildet und angeordnet, um in dem Greifvorgang der Greifvorrichtung einen radialen Anschlag auf einer zweiten radialen Seite zu bilden (der ersten radialen Seite gegenüberliegend angeordnet). Es kann vorgesehen sein, dass der durch die Gegenlagereinrichtung gebildete radiale Anschlag auf der zweiten radialen Seite auf eine vorgegebene radiale Position zustellbar ist. Die Ausrichteinrichtung kann entsprechend die Leiterstückreihen klemmend gegen diesen an einer vorgegebenen Position befindlichen radialen Anschlag fixieren. Der radiale Anschlag der Ausrichteinrichtung kann derart ausgebildet sein, dass er mit einer definierten Kraft die Leiterstücke der Leiterstückreihe gegen den Anschlag der Gegenlagereinrichtung klemmt. Beispielsweise kann dies über eine federnde Lagerung (oder ein andersartiges Andrücken mit definierter Kraft) des radialen Anschlags der Ausrichteinrichtung realisiert werden.

Die Greifvorrichtung ist ausgebildet, um die Leiterstücke der jeweiligen Reihenanordnung bzw. Leiterstückreihe zwischen dem radialen Anschlag der Ausrichteinrichtung und dem radialen Anschlag der Gegenlagereinrichtung klemmend zu fixieren. Mit anderen Worten, die Greifvorrichtung ist ausgebildet, um die Leiterstücke einer jeweiligen Leiterstückreihe aus radialer Richtung her klemmend zu fassen.

Unter einer Reihenanordnung ist im Sinn der vorliegenden Erfindung eine radial erstreckte Anordnung von wenigstens 2 jedoch insbesondere 3 Schenkeln von unterschiedlichen Hairpins zu verstehen. Mit anderen Worten, die einzelnen Schenkel der Hairpins bilden eine in radialer Richtung erstreckte Reihe.

Die erfindungsgemäße Vorrichtung erlaubt einen sicheren Griff aller Haipins in einem einzigen Greifvorgang. Ein Nachjustieren und/oder weiteres Ausrichten der einzelnen Hairpins wird somit überflüssig.

Erfindungsgemäß weist die Ausrichteinrichtung mehrere gabelförmige Aufnehmer auf, die jeweils dazu ausgebildet und angeordnet sind die Leiterstücke einer Reihenanordnung zu erfassen, wobei die Greifvorrichtung insbesondere derart ausgebildet ist, dass die jeweiligen gabelförmigen Aufnehmer im Greifvorgang jeweils in radialer Richtung auf die Leiterstücke einer jeweiligen Reihenanordnung aufgeschoben werden. Die Leiterstücke einer Reihenanordnung werden durch die Ausrichteinrichtung fluchtend zueinander ausgerichtet und die einzelnen Reihenanordnungen werden in ihrer Winkelstellung in Umfangsrichtung festgelegt bzw. der Winkelmäßige Versatz.

Die Ausrichteinrichtung kann Aufnehmer umfassen, die als einstückige Elemente ausgebildet sind, die den beidseitigen umfänglichen Anschlag sowie den ersten radialen Anschlag bilden. Bspw. können diese mit definierter Kraft gegen die Leiterstücke gedrängt werden. Derartige Aufnehmer sind konstruktiv einfach und erlauben eine mechanisch vorteilhafte Bildung der Anschläge für die Leiterstückreihen.

Es ist aber auch denkbar, dass die Aufnehmer gabelförmig ausgeführt sind und jeweils ein federnd gelagertes Element aufweisen, welches mittig in der Gabel angeordnet ist. Dieses federnd gelagerte Element bildet jeweils den ersten radialen Anschlag für eine Leiterstückreihe. Ein derartiger radialer Anschlag drängt beim klemmenden Greifen mit der definierten (durch die Stärke der Feder) Federkraft gegen die Leiterstücke.

Es kann vorgesehen sein, dass die, insbesondere gabelförmigen, Aufnehmer jeweils über einen Fortsatz in eine Kulissenbahn eingreifen. Insbesondere können mehrere Kulissenbahnen, insbesondere alle Kulissenbahnen (eine Kulissenbahn je Aufnehmer), in einem Kulissenelement angeordnet sein. Die Kulissenbahnen können derart auf dem Kulissenelement angeordnet sein, dass die Aufnehmer durch eine Rotationsbewegung des Kulissenelements in radialer Richtung bewegbar sind. Die Rotationsbewegung des Kulissenelements kann beispielsweise durch einen pneumatischen Antrieb, insbesondere einen Pneumatikzylinder, erfolgen. Die gabelförmigen Aufnehmer können jeweils über eine Richtungsgebereinrichtung derart geführt sein, dass sie lediglich in radialer Richtung innerhalb der Greifvorrichtung bewegbar sind. Durch die eben beschriebenen Ausgestaltungen ist es möglich die Aufnehmer in konstruktiv einfacher Weise von ihrer zurückgezogenen Stellung in eine Stellung zu überführen, in der sie an den Leiterstücken anliegen.

Dabei kann die Richtungsgebereinrichtung je Aufnehmer einen aufnehmerseitigen Fortsatz umfassen, der in eine radial gerichtete Führung eingreift. Ebenso ist eine Richtungsgebereinrichtung denkbar, die je Aufnehmer eine radial gerichtete aufnehmerseitige Aufnahme, in die ein greifvorrichtungsseitiger Fortsatz eingreift, aufweist.

Nach einer weiteren Ausgestaltung der beanspruchten Vorrichtung, sind die Ausrichteinrichtung und die Gegenlagereinrichtung jeweils ausgebildet und angeordnet, um an den hairpinförmigen Leiterstücken jeweils an den Schenkeln der Hairpins bzw. Schenkelabschnitten anzugreifen, wenn diese in der Aufnahme angeordnet sind.

Nach einer weiteren Ausgestaltung der beanspruchten Vorrichtung, umfasst die Gegenlagereinrichtung einen Zylinder mit radial schwenkbaren oder biegsamen Fingern, die jeweils als radiale Anschläge der Gegenlagereinrichtung dienen. Auf diese Weise ist ein einzelnes Element zur Ausbildung der Gegenlagereinrichtung verwendbar, welches ein Gegenlager bzw. einen zweiten radialen Anschlag für sämtliche Reihen von Leiterstücken bilden kann.

Nach einer weiteren Ausgestaltung der beanspruchten Vorrichtung, umfasst die Gegenlagereinrichtung zwei axial zueinander bewegliche Elemente, durch deren Relativbewegung zueinander die radialen Anschläge der Gegenlagereinrichtung in radialer Richtung bewegbar sind. Hierdurch kann durch eine axiale Bewegung, für welche in der Vorrichtung ausreichend Raum besteht, eine radiale Anlegebewegung der zweiten radialen Anschläge realisiert werden.

Dabei umfasst ein erstes Element radial schwenkbare Finger und ein zweites Element einen sich in radialer Richtung aufweitenden konischen Abschnitt, der an den Fingern anliegt und in axialer Richtung gegenüber diesen bewegbar ist, wobei durch eine axiale Bewegung des zweiten Elements die Finger nach radial außen drängbar sind. Hierdurch wird eine konstruktiv einfache Möglichkeit zur synchronen und gleichmäßigen Bewegung sämtlicher zweiten radialen Anschläge bereitgestellt. Die Finger können hierdurch auf eine definierte radiale Position gestellt werden um den radialen Anschlag zu bilden. Die bspw. gabelförmigen Aufnehmer der Ausrichteinrichtung können anschließend radial einwärts auf diesen Anschlag zu bewegt werden und die Leiterstücke gegen diesen drängen und gegen diesen klemmen.

Die Finger des zweiten Elements können durch die oben beschriebene Relativbewegung beider Elemente der Gegenlagereinrichtung auf ein bestimmtes Sollmaß gespreizt werden. So kann ein fester zweiter radialer Anschlag eingestellt werden. In diesem Fall werden während des Greifvorgangs die Leiterstücke innerhalb einer Leiterstückreihe von dem ersten radialen Anschlag (außen) gegen den zweiten radialen Anschlag (innen), der voreingestellt wird, angedrückt. Nach einer weiteren Ausgestaltung der beanspruchten Vorrichtung, umfasst die Vorrichtung weiter einen Initialgreifer, der ausgebildet ist, um die Leiterstücke in der Aufnahme in einer vorgesehenen Konfiguration auszurichten, so dass diese von der Greifvorrichtung erfasst und entnommen werden können. Der Initialgreifer dient also quasi zu einem ersten Ausrichten der Leiterstücke, welche aufgrund ihrer spielbehafteten Anordnung in der Aufnahme von ihrer gewünschten Position noch leicht abweichen können. Der Initialgreifer kann insbesondere zwei halbschalenförmige Greifelemente umfassen. Da die Leiterstücke zur Einbringung in den Stator in einer weitestgehend kreisförmigen Anordnung befindlich sind, stellt die Ausführung mit den zwei halbschalenförmigen Greifelementen eine konstruktiv einfache Möglichkeit der Ausgestaltung des Initialgreifers dar. Die halbschalenförmigen Elemente können dabei auf die in der Aufnahme befindlichen Leiterstücke in der Horizontalebene translatorisch bewegbar sein, denkbar ist jedoch auch, dass sie schwenkbar gelagert sind, um die Leiterstücke zu kontaktieren. Die Greifelemente des Initialgreifers können auch in beliebig viele Segmente aufgeteilt sein. Der Initialgreifer kann stationär im Bereich der Aufnahme angeordnet sein.

Nach einer weiteren Ausgestaltung der beanspruchten Vorrichtung, umfasst die Vorrichtung eine Verdreheinrichtung, die angeordnet und ausgebildet ist, um verbindungsabschnittsabgewandte Enden (vom Verbindungsschenkel abgewandte Enden) der Schenkelabschnitte der hairpinförmigen Leiterstücke zu erfassen, wenn diese im Statorkern eingesetzt sind, und durch eine Rotationsbewegung in umfänglicher Richtung zu Verformen. Das Verdrehen bzw. Verformen dient zum einen dazu, die Enden der Hairpins in die für einen späteren Verschweißvorgang gewünschte Konfiguration zu bringen und zum anderen die Hairpins durch das Verdrehen formschlüssig in dem Statorkern gehalten.

Die Verdreheinrichtung kann wenigstens zwei, insbesondere zylinderartig, ausgebildete Verdreheinheiten aufweisen. Die Verdreheinheiten sind jeweils ausgebildet, um eine Mehrzahl, vorzugsweise alle, auf einer Kreisbahn angeordneten aus dem Stator überstehenden Enden der Schenkelabschnitte der hairpinförmigen Leiterstücke zu erfassen und durch eine Rotationsbewegung in umfänglicher Richtung zu verformen. Mit anderen Worten, in einer radial erstreckten Reihe von Leiterstücken liegen je Reihe jeweils Leiterstückenden auf einer Kreisbahn. Je mehr Leiterstückenden in einer Reihe in radialer Richtung aufeinanderfolgend angeordnet sind, desto mehr solcher fiktiven Kreisbahnen liegen vor. Je Kreisbahn kann eine Verdreheinheit vorgesehen sein. Damit können alle auf einer Kreisbahn befindlichen Leiterstücke in dieselbe Richtung gegenüber ihrer Ausgangskonfiguration verdreht werden. Insbesondere können dabei jeweils in radialer Richtung nebeneinanderliegende Verdreheinheiten in gegenläufiger umfänglicher Richtung bewegbar sein, so dass die Enden der Schenkelabschnitte der hairpinförmigen Leiterstücke in jeweils radial aufeinander folgenden Kreisbahnen in gegenläufiger umfänglicher Richtung verformbar sind.

Die Verdreheinheiten können derart ausgebildet sein, dass sie von einem zylinderförmigen, den Leiterstücken zugewandten Abschnitt jeweils nach radial auswärts auskragen und einen radial erstreckten plattenartigen Abschnitt aufweisen. Die radial erstreckten plattenartige Abschnitte der einzelnen Verdreheinheiten können jeweils einen radial außenliegenden Zahnabschnitt aufweisen und die Vorrichtung weiterhin je Verdreheinheit eine Antriebseinheit umfassen. Die Antriebseinheit kann jeweils über ein Zahnradelement in den radial außenliegenden Zahnabschnitt des jeweiligen plattenartigen Abschnitts eingreifen, um die Rotationsbewegung der einzelnen Verdreheinheiten zu bewirken.

Die zylinderförmigen, den Leiterstücken zugewandten Abschnitte der Verdreheinheiten können jeweils konzentrisch ineinander liegen.

Nach einer weiteren Ausgestaltung der beanspruchten Vorrichtung, setzt die Greifvorrichtung die Leiterstücke von einer ersten Seite her in den Statorkern ein, wobei die Verdreheinrichtung auf einer gegenüberliegenden zweiten Seite des Statorkerns angeordnet ist.

Zwischen Verdreheinrichtung und Statorkern kann eine zweite Ausrichteinrichtung angeordnet sein, die ausgebildet und angeordnet ist, um jeweils bspw. stiftartige Ausrichter, die insbesondere einen sich nach radial außen erweiternden Querschnitt aufweisen können, zwischen die einzelnen Reihenanordnungen der Leiterstücke einzufahren. Durch eine derartige Ausrichteinrichtung können die Leiterstücke beim Umformvorgang mittels der Verdreheinheiten in umfänglicher Richtung sicher gehalten werden. Die Ausrichter können stift- oder keilförmig ausgestaltet sein. Sie können aber auch, analog zu den Aufnehmern der ersten Ausrichteinrichtung gabelförmig ausgestaltet sein. Insbesondere sind die Ausrichter ausgebildet um mit ihren umfänglichen Seitenflächen je zwei umfänglich benachbarte Leiterstückreihen zu kontaktieren, wenn sie zwischen diese eingefahren werden.

Die Ausrichter dieser zweiten Ausrichteinrichtung können jeweils über einen Fortsatz in eine Kulissenbahn eingreifen, wobei insbesondere mehrere Kulissenbahnen, insbesondere alle Kulissenbahnen, in einem Kulissenelement angeordnet sein können, wobei die Kulissenbahnen derart auf dem Kulissenelement angeordnet sind, dass die Ausrichter durch eine Rotationsbewegung des Kulissenelements in radialer Richtung bewegbar sind, wobei die Ausrichter jeweils über eine Richtungsgebereinrichtung derart geführt sind, dass sie lediglich in radialer Richtung innerhalb der Ausrichteinrichtung bewegbar sind.

Dabei kann die Richtungsgebereinrichtung je Ausrichter einen ausrichterseitigen Fortsatz umfassen, der in eine radial gerichtete Führung eingreift. Ebenso ist eine Richtungsgebereinrichtung denkbar, die je Ausrichter eine radial gerichtete ausrichterseitige Aufnahme, in die ein ausrichteinrichtungseitiger Fortsatz eingreift, aufweist.

Nach einer weiteren Ausgestaltung der beanspruchten Vorrichtung, umfasst die Vorrichtung eine Maschinenbasis, wobei auf der Maschinenbasis die Bestückeinrichtung, die Aufnahme, die Greifvorrichtung mit einer ersten Ausrichteinrichtung, die Statorkernaufnahme, die Verdreheinrichtung und die zweite Ausrichteinrichtung angeordnet sind. Weiter kann auf der Maschinenbasis eine Anordnung zum räumlichen Verfahren der Greifvorrichtung angeordnet sein. Diese kann bspw. eine Schlittenkonstruktion umfassen (bspw. mit in die verschiedenen Raumrichtungen verfahrbaren Querschlitten). Die Schlitten können bspw. an einer portalartig ausgebildeten Trägerkonstruktion angeordnet sein.

Des Weiteren wird die Aufgabe gelöst durch ein Verfahren zur Bestückung eines Statorkerns mit Leiterstücken, vorzugsweise mit Hairpins, die insbesondere mit rechteckigem Leiterquerschnitt ausgebildet sind, wobei das Verfahren die folgenden Schritte umfasst:
Bestücken einer Aufnahme mit Leiterstücken mittels einer Bestückeinrichtung in einer Konfiguration, die einer zum Einsetzen in einen Statorkern vorgesehenen Konfiguration der Leiterstücke entspricht, wobei die Leiterstücke in der vorgesehenen Konfiguration in der Aufnahme in radial erstreckten Reihenanordnungen angeordnet werden. Um ein einfaches Bestücken zu ermöglichen, werden die Leiterstücke typischerweise spielbehaftet in die Aufnahme eingesetzt. Vor dem Bestücken der Aufnahme können die einzelnen Leiterstücke, bzw. die Schenkelabschnitte der einzelnen Leiterstücke, bereits die für das spätere Verdrehen benötigte Länge aufweisen. Das bedeutet, dass sie gegebenenfalls in einem vorangegangenen Schritt auf eine bestimmte Länge gebracht wurden.

Ggf. Vorausrichten der Leiterstücke (bspw. mittels eines Ini tialgrei fers).

Platzieren einer Greifvorrichtung über der Aufnahme und der in der Aufnahme angeordneten Leiterstücke.

Greifen der in der Aufnahme gehaltenen Leiterstücke in einer vorgesehenen endgültigen Anordnung für den Einsatz in den Statorkern mittels einer Ausrichteinrichtung und einer Gegenlagereinrichtung. Die Leiterstücke werden während des Greifvorgangs durch die Ausrichtereinrichtung und die Gegenlagereinrichtung ausgerichtet.

Entnahme der Leiterstücke aus der Aufnahme durch Anheben der Greifvorrichtung.

Verfahren der Greifvorrichtung und der darin fixierten Leiterstücke über den Statorkern.

Einsetzen der Leiterstücke in den Statorkern durch Senken der Greifvorrichtung. Dabei werden die Leiterstücke nur zum Teil (bspw. ca. 20 mm) in den Statorkern eingeführt.

Lösen des Griffs durch die Ausrichteinrichtung und die Gegenlagereinrichtung, so dass die Leiterstücke lediglich vom Statorkern gehalten werden.

Die Leiterstücke werden durch weiteres Senken der Greifvorrichtung weiter in den Stator, bis zur finalen Einsetztiefe, eingeführt.

Ausrichten der Leiterstücke mittels einer zweiten Ausrichteinrichung unterhalb des Statorkerns und anschließendes Verdrehen verbindungsabschnittsabgewandter Enden der Schenkelabschnitte der hairpinförmigen Leiterstücke mittels einer Verdreheinrichtung, die sich unterhalb der zweiten Ausrichteinrichtung befindet.

Die Begriffe Heben und Senken bzw. oben und unten im vorliegenden Fall sind derart zu verstehen, dass ein Absenken in beliebige Richtung erfolgen kann (auch gegen die Gravitationsrichtung). Entsprechendes gilt für Anheben. Lediglich der Verständlichkeit halber werden hier die Begriffe Heben und Senken verwendet. Gemeint ist hiermit eine jeweilige Relativbewegung der Greifvorrichtung auf die Aufnahme bzw. den Statorkern hin bzw. von diesem weg. So können beispielsweise die Verdrehvorrichtung und der Statorkern vertikal übereinander oder um 90° gedreht horizontal nebeneinander angeordnet sein.

Der Statorkern bzw. die Aufnahme für den Statorkern kann bspw. derart angeordnet sein, dass die Leiterstücke durch eine vertikale Bewegung in den Statorkern eingeführt werden können.

Erfindungsgemäß wird zur Durchführung des Verfahrens eine Vorrichtung nach einem der Ansprüche 1 bis 14 verwendet.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1: Eine perspektivische Ansicht einer erfindungsgemäßen Vorrichtung;
- Fig. 2: zwei Draufsichten eines Initialgreifers gem. Fig. 1;
- Fig. 3: einen Querschnitt einer Greifvorrichtung nebst einer Aufnahme gem. Fig. 1;
- Fig. 4: einen Ausschnitt eines Querschnitts einer Ausrichteinrichtung gem. Fig. 3;
- Fig. 5: einen Querschnitt einer Gegenlagereinrichtung gem. Fig. 3 im geöffneten Zustand;
- Fig. 6: einen Querschnitt einer Gegenlagereinrichtung gem. Fig. 3 im geschlossenen Zustand;
- Fig. 7: einen Querschnitt einer Greifvorrichtung nebst einer Aufnahme gem. Fig. 1;
- Fig. 8: zeigt einen Querschnitt einer Greifvorrichtung nebst einer Aufnahme gem. Fig. 1;
- Fig. 9: zeigt einen Querschnitt durch eine Greifvorrichtung und einen Statorkern gem. Fig. 1 und eine zweite Ausrichteinrichtung und eine Verdreheinrichtung;
- Fig. 10: zeigt eine perspektivische Ansicht eines Querschnitts auf einen Statorkern, eine zweite Ausrichteinrichtung und eine Verdreheinrichtung gem. Fig. 9;
- Fig. 11: zeigt einen Ausschnitt einer Draufsicht auf eine zweite Ausrichteinheit gem. Fig. 10;
- Fig. 12: zeigt einen Ausschnitt einer perspektivischen Ansicht auf eine Verdreheinheit gem. Fig. 10;
- Fig. 13: zeigt einen Querschnitt auf einen Statorkern, eine zweite Ausrichteinrichtung und eine Verdreheinrichtung gem. Fig. 9;
- Fig. 14: zeigt einen Querschnitt durch einen Statorkern, eine zweite Ausrichteinrichtung und eine Verdreheinrichtung gem. Fig. 9;
- Fig. 15: zeigt eine perspektivische Ansicht eines Aufnehmers; und
- Fig. 16: zeigt eine perspektivische Ansicht eines mit Leiterstücken bestückten Stators nebst zwei Ausrichtern.

In den folgenden Figuren tragen sich entsprechende Bauteile und Elemente gleiche Bezugszeichen. Der besseren Übersichtlichkeit wegen sind nicht in allen Figuren sämtliche Bezugszeichen wiedergegeben.

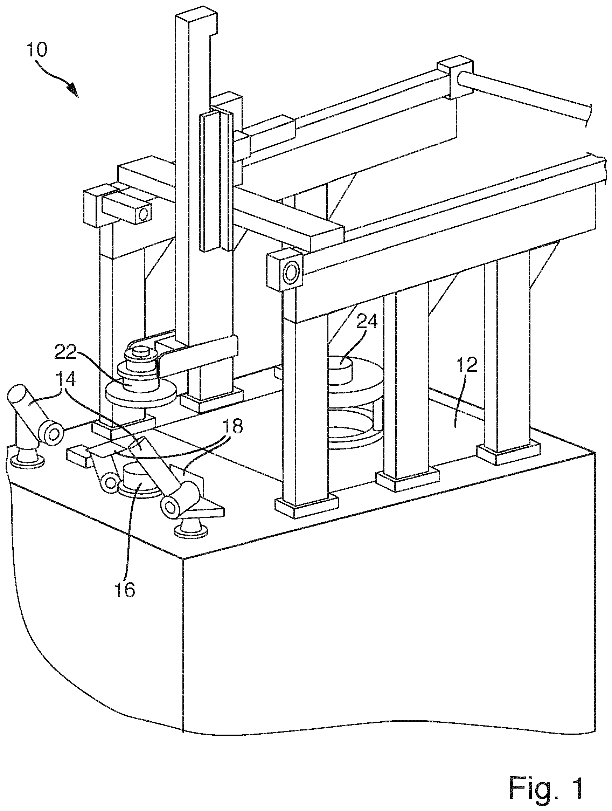

Figur 1 zeigt eine perspektivische Ansicht einer erfindungsgemäßen Vorrichtung 10. In dem dargestellten Ausführungsbeispiel weist die Vorrichtung 10 eine Maschinenbasis 12 auf. Auf der Maschinenbasis 12 ist eine Bestückeinrichtung 14, eine Aufnahme 16 und ein Initialgreifer 18 angeordnet.

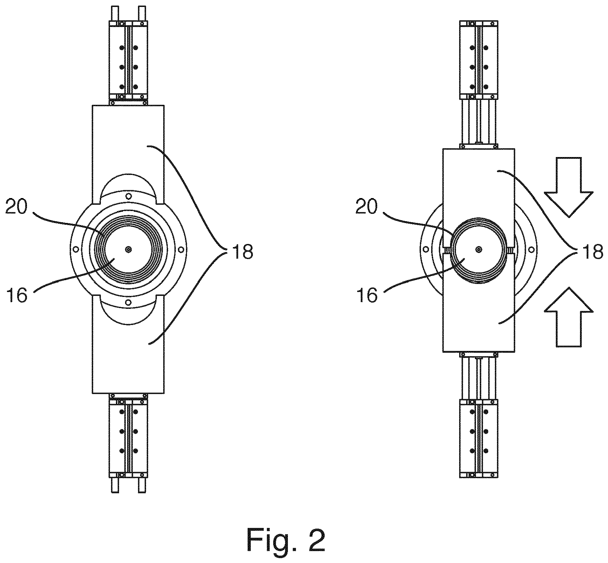

Die Aufnahme 16 wird mittels der Bestückeinrichtung 14, die hier greiferbasiert als zwei Roboterarme ausgebildet ist, mit in Fig. 2 abgebildeten Leiterstücken 20, insbesondere Hairpins, bestückt. Die Roboterarme greifen dabei jeweils einzeln die Leiterstücke 20 und setzen diese einzeln nacheinander in die Aufnahme 16 ein.

Wenn die Aufnahme 16 vollständig mit Leiterstücken 20 bestückt ist, sind die Leiterstücke 20 bereits derart in radial erstreckten Reihen angeordnet, wie sie später in einen Statorkern eingesetzt werden sollen. Die Leiterstücke 20 haben somit zwar bereits ihre finale Konfiguration, haben aber noch bezogen auf Ihre Lage untereinander etwas Spiel, sind also noch lose in der Aufnahme 16 angeordnet. Die Aufnahme 16 kann so schnell und effektiv bestückt werden. Insbesondere ist es möglich die Leiterstücke 20, welche vorliegend als Hairpins ausgebildet sind, dicht und einander teilweise überlappend in der Aufnahme 16 anzuordnen.

Der Initialgreifer 18, ist im vorliegenden Beispiel aus zwei halbschalenförmigen Greifelementen aufgebaut ist. Die Aufnahme 16 befindet sich dabei zwischen den beiden halbschalenförmigen Greifelementen des Initialgreifers 18, die stationär auf der Maschinenbasis 12 angeordnet sind. Sobald die Aufnahme 16 vollständig mit Leiterstücken 20 bestückt ist, werden die beiden halbschalenförmigen Greifelemente des Initialgreifers 18 derart verfahren, dass diese sich aufeinander zubewegen und die noch lose angeordneten Leiterstücke 20 in der Aufnahme 16 formschlüssig ausrichten, siehe auch Fig. 2.

Des Weiteren ist eine Greifvorrichtung 22 abgebildet, die mittels Schienen mit der Maschinenbasis 12 verbunden sein kann. Vorliegend sind die Schienen portalförmlich ausgestaltet, sodass ein Verfahren der Greifvorrichtung 22 in alle drei Richtungen möglich ist. Die Greifvorrichtung 22 greift die ausgerichteten Leiterstücke 20 und verfährt diese zu einem Statorkern 24, in den die Leiterstücke 20 dann eingesetzt werden. Dabei ist der Statorkern auf einer Station (Statorkernaufnahme), die auf der Maschinenbasis 12 angeordnet ist, platziert.

Figur 2 zeigt zwei Draufsichten des Initialgreifers 18 gemäß Fig. 1 und verdeutlicht die Funktionsweise des Initialgreifers 18. Es sind jeweils die beiden halbschalenförmigen Greifelemente des Initialgreifers 18 und die Aufnahme 16, die bereits mit Leiterstücken 20 bestückt ist, abgebildet. In der linken Draufsicht ist der Initialgreifer 18 geöffnet. Die halbschalenförmigen Greifelemente des Initialgreifers 18 werden nun gegeneinander verfahren bzw. aufeinander zu bewegt. Die Verfahrrichtung ist mittels Pfeilen in der rechten Draufsicht verdeutlicht. Durch das Schließen des Initialgreifers 18 bzw. das Aufeinander zubewegen der halbschalenförmigen Greifelemente werden die in der Aufnahme 16 angeordneten Leiterstücke 20 formschlüssig ausgerichtet. Der Initialgreifer 18 öffnet, indem die halbschalenförmigen Greifelemente wieder auseinander bewegt werden.

Die halbschalenförmigen Greifelemente des Initialgreifers 18 können bereits vor dem Greifen durch die Greifvorrichtung 22 wieder auseinander bewegt werden. Es ist aber auch ein Auseinanderbewegen der halbschalenförmigen Greifelemente des Initialgreifers 18 nach dem Greifen der Leiterstücke 20 mittels der Greifvorrichtung 22 denkbar.

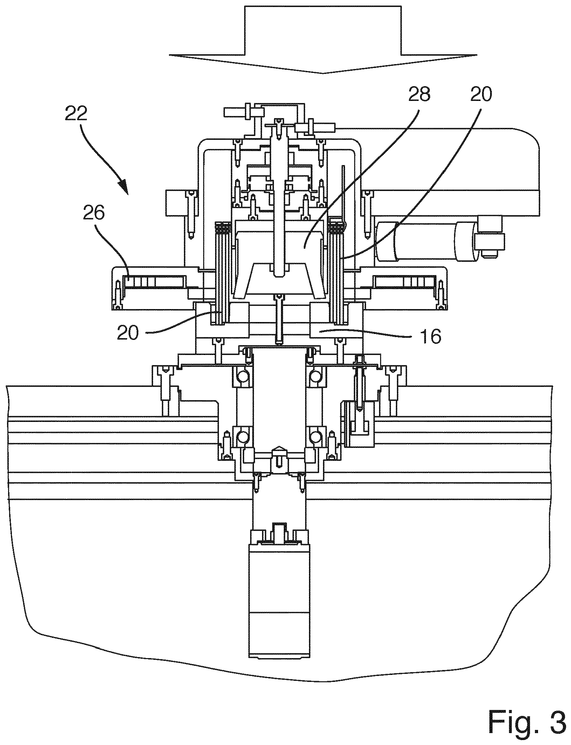

Figur 3 zeigt einen Querschnitt der Greifvorrichtung 22 nebst der Aufnahme 16 gemäß Fig. 1. In der Aufnahme 16 befinden sich die bereits ausgerichteten Leiterstücke 20. Die Greifvorrichtung 22 wird auf die Aufnahme 16 und damit auch die Leiterstücke 20 bewegt, so dass die Leiterstücke 20 von der Greifvorrichtung 22 überstülpt werden.

Die Greifvorrichtung 22 umfasst eine Ausrichteinrichtung 26 und eine Gegenlagereinrichtung 28, die in Fig. 3 jeweils im geöffneten Zustand dargestellt sind.

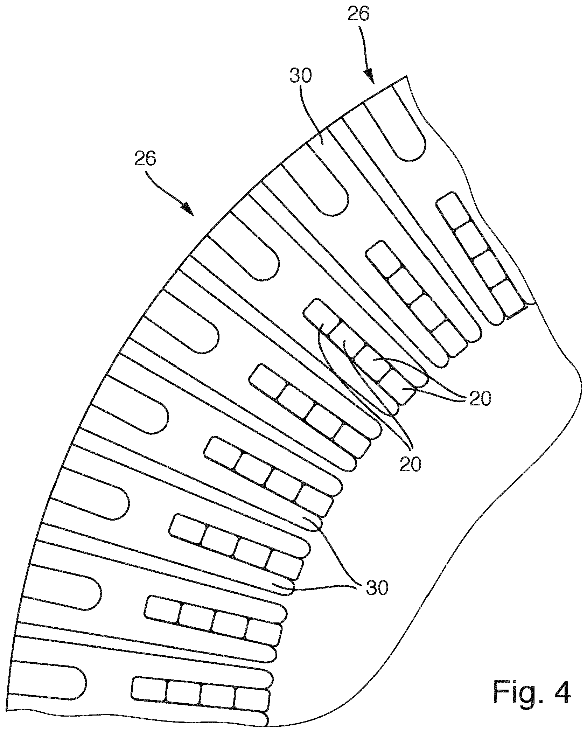

Figur 4 zeigt einen Ausschnitt der Ausrichteinrichtung 26 der Greifvorrichtung 22 beim Blick von der Aufnahme 16 her. Die Ausrichteinrichtung 26 weist eine Vielzahl von Aufnehmern 30 auf. Die Anzahl der Aufnehmer 30 entspricht der Anzahl der Reihen von Leiterstücken 20. Die Aufnehmer 30 sind hier gabelförmig und einstückig ausgestaltet und bezüglich einander kreisförmig angeordnet. Die Aufnehmer 30 sind radial verfahrbar in der Greifvorrichtung 22 angeordnet.

Beim Greifvorgang wird die Ausrichteinrichtung 26 betätigt und die Aufnehmer 30 radial einwärts, also in Richtung des Mittelpunktes der Aufnahme 16 bewegt. Jeweils ein Aufnehmer 30 erfasst eine Leiterstückreihe. Die Aufnehmer 30 bilden einen ersten radialen Anschlag für die Leiterstückreihen von radial außen her sowie einen beidseitigen Anschlag in umfänglicher Richtung. Vorliegend ist dies durch die gabelförmige Ausgestaltung gegeben, andere Ausgestaltungen der Aufnehmer 30 sind denkbar. Beispielsweise ist auch denkbar, dass der radiale Anschlag unabhängig von den umfänglichen Anschlägen bewegbar ist. Vorzugsweise sind die durch die Aufnehmer 30 gebildeten umfänglichen Anschläge und der radiale Anschlag jedoch durch eine einschlägige Ausbildung der entsprechenden Teilabschnitte der Aufnehmer 30 realisiert.

Beim Öffnen der Ausrichteinrichtung 26 werden die Aufnehmer 30 radial nach außen geschoben, so dass die Leiterstückreihen wieder freigegeben werden können. Um die Leiterstücke 20 zu greifen wirkt die Ausrichteinrichtung 26 mit der Gegenlagereinrichtung 28 zusammen.

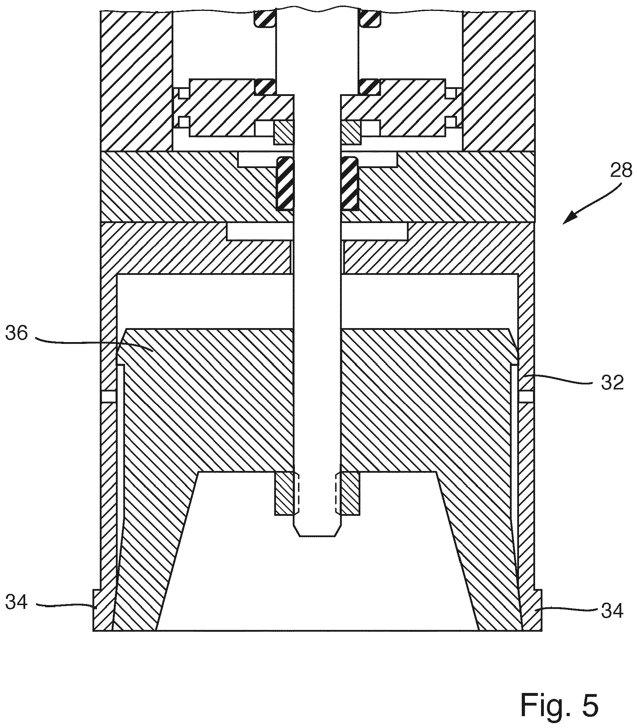

Die Gegenlagereinrichtung 28 ist derart ausgebildet, dass sie einen zweiten radialen Anschlag für die Leiterstückreihen bildet. Die Gegenlagereinrichtung 28 ist ausgebildet, um die Leiterstücke 20 von radial innen her zu kontaktieren. Die radialen Anschläge, die durch die Ausrichteinrichtung 26 und die Gegenlagereinrichtung 28 bereitgestellt werden sind derart radial aufeinander zu bewegbar, dass die Leiterstücke 20 einer Leiterstückreihe zwischen den Anschlägen klemmend greifbar sind. Figur 5 zeigt einen Querschnitt der Gegenlagereinrichtung 28 gemäß Fig. 3 im geöffneten Zustand. Die gezeigte Gegenlagereinrichtung 28 umfasst zwei axial zueinander bewegliche Elemente, vorliegend einen Zylinder 32 und ein Element 36. Der Zylinder 32 weist eine Vielzahl von radial schwenkbaren oder biegbaren Fingern 34 auf. Die Anzahl der Finger 34 entspricht der Anzahl der Reihen von Leiterstücken 20 bzw. der Anzahl an Aufnehmern 30.

Der Zylinder 32 und das Element 36 sind zueinander bewegbar. Durch deren Relativbewegung kann das Element 36 innerhalb des Zylinders auf der Zylinderachse bewegt werden. Das Element 36 weist hier eine konische Form auf, so dass durch die oben beschriebene Relativbewegung des Elements 36 die Finger 34 radial nach außen gespreizt werden können. In dem hier dargestellten geöffneten Zustand der Gegenlagereinrichtung 28 befinden sich die Finger 34 in ihrer nicht gespreizten Anordnung.

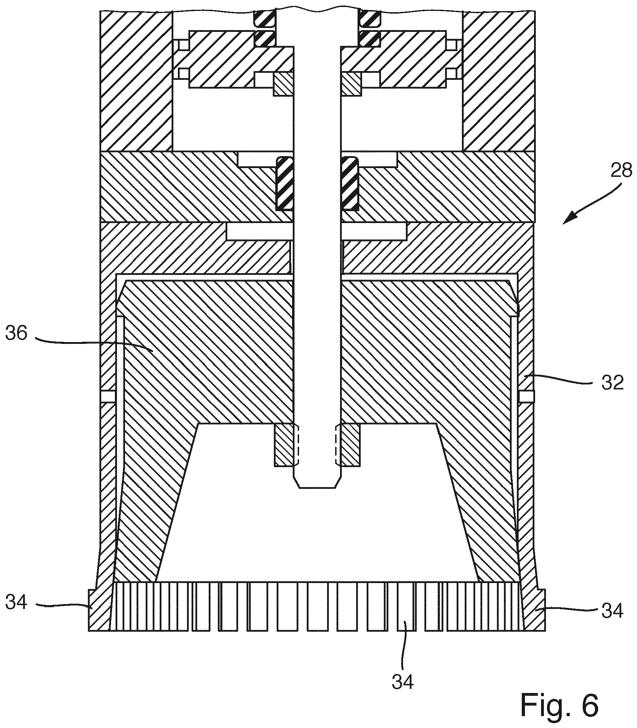

Figur 6 zeigt einen Querschnitt der Gegenlagereinrichtung 28 gemäß Fig. 3 im betätigten bzw. greifenden Zustand. Die Finger 34 wurden durch die konische Form des Elements 36 und die Relativbewegung zwischen dem Zylinder 32 und dem Element 36 radial nach außen gedrängt.

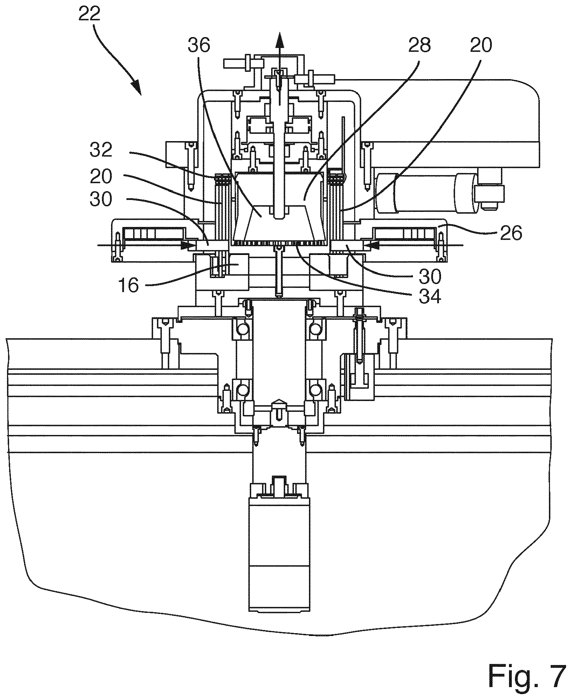

Durch das Betätigen der Gegenlagereinrichtung 28 können die Finger 34 radial gespreizt bzw. bewegt werden. Betätigung der Gegenlagereinrichtung 28 erfolgt dabei durch die Relativbewegung zwischen dem Zylinder 32 und dem Element 36. Die Relativbewegung kann durch einen entsprechenden Aktuator bewirkt werden. Figur 7 zeigt eine Schnittdarstellung der Greifvorrichtung 22 nebst der Aufnahme 16 gemäß Fig. 1. Es ist ein Greifvorgang abgebildet. Die Ausrichteinrichtung 26 wird geschlossen, so dass die Aufnehmer 30 sich radial zum Mittelpunkt (Richtung durch die dicken Pfeile angedeutet) bewegen und die Leiterstückreihen umschließen. Die Gegenlagereinrichtung 28 wird ebenfalls geschlossenen, indem das Element 36 relativ zum Zylinder 32 bewegt wird (Richtung durch den dünnen Pfeil angedeutet). Die Finger 34 bilden dabei einen radialen Gegenanschlag zu dem Anschlag, der durch die Aufnehmer 30 gebildet wird. Die Leiterstückreihen werden zwischen der Ausrichteinrichtung 26 und der Gegenlagereinrichtung 28 eingeklemmt und die Leiterstücke 20 so mit der Greifvorrichtung 22 gegriffen.

In dem vorliegenden Ausführungsbeispiel werden die Finger 34 auf ein festet Sollmaß radial gespreizt bzw. bewegt. Die Finger 34 stellen somit einen starren Anschlag dar und bewegen sich während des Greifvorgangs nicht. Die einzelnen Leiterstückreihen werden lediglich von außen durch die Aufnehmer 30 jeweils gegen diesen starren Anschlag der einzelnen Finger 34 gedrückt.

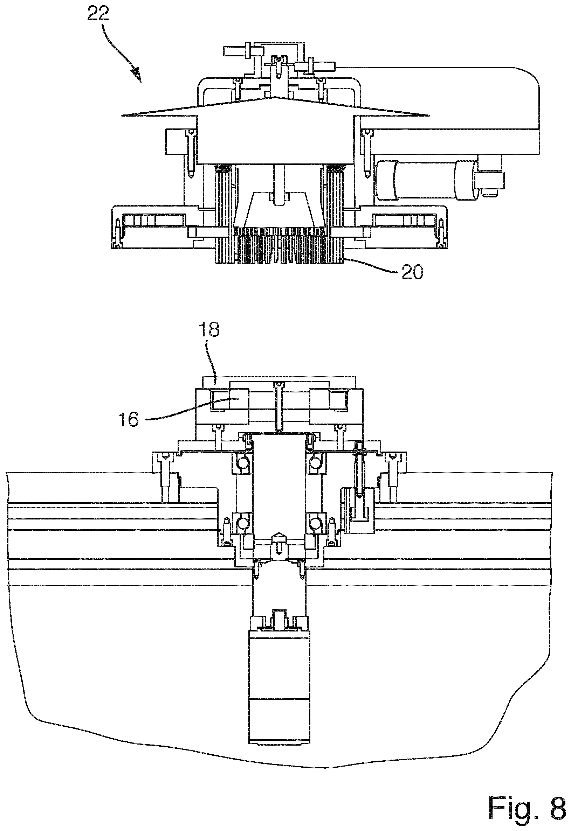

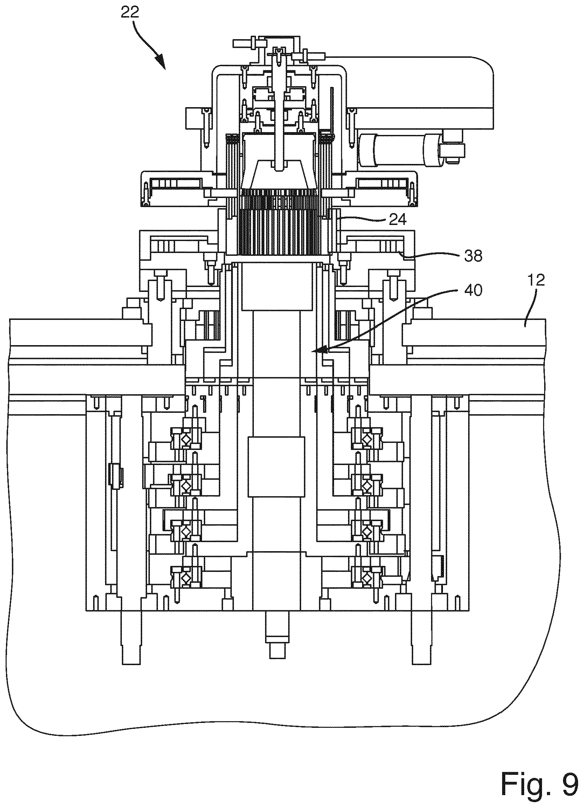

Figur 8 zeigt einen Querschnitt der Greifvorrichtung 22 nebst der Aufnahme 16 gemäß Fig. 1. Nach dem in Fig. 7 beschriebenen Greifvorgang wird die Greifvorrichtung 22 in Richtung des dargestellten Pfeils bewegt und somit die Leiterstücke 20 aus der Aufnahme 16 entnommen. Anschließend werden die Leiterstücke über den Statorkern 24 gefahren und dort, wie in Fig. 9 gezeigt, eingesetzt.

Das Einsetzen geschieht, indem die Greifvorrichtung 22 und der Statorkern 24 in einer Relativbewegung aufeinander zu bewegt werden.

Der Griff der Greifvorrichtung 22 wird gelöst, indem die Ausrichteinrichtung 26 und die Gegenlagereinrichtung 28 jeweils öffnet, so dass die Leiterstücke wieder freigegeben werden.

Figur 9 zeigt einen Querschnitt durch die Greifvorrichtung 22 und den Statorkern 24 gemäß Fig. 1 und eine zweite Ausrichteinrichtung 38 und eine Verdreheinrichtung 40.

Der Statorkern 24 ist auf der zweiten Ausrichteinrichtung 38 platziert, diese ist auf der Verdreheinrichtung 40 angeordnet und die Verdreheinrichtung 40 ist an der Maschinenbasis 12 angeordnet.

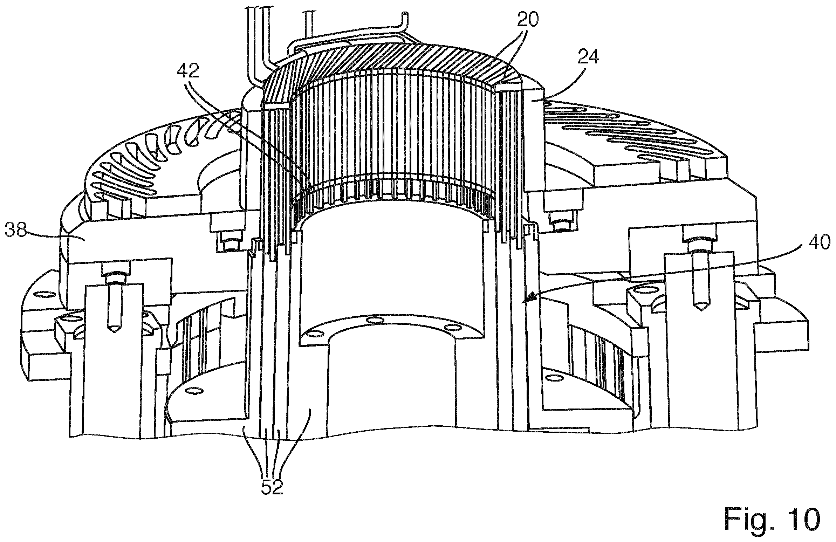

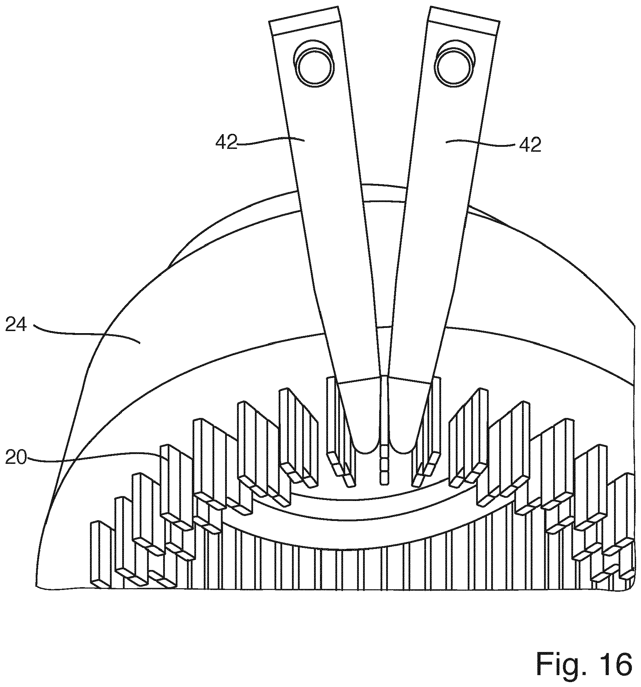

Figur 10 zeigt eine perspektivische Ansicht eines Querschnitts auf den Statorkern 24, die zweite Ausrichteinrichtung 38 und die Verdreheinrichtung 40 gemäß Fig. 9. Die zweite Ausrichteinrichtung 38 ist analog zur Ausrichteinrichtung 26 aufgebaut. Die zweite Ausrichteinrichtung 38 weist eine Vielzahl von Ausrichtern 42 auf. Die Anzahl der Ausrichter 42 entspricht der Anzahl der Reihen von Leiterstücken 20. Im vorliegenden Beispiel sind die Ausrichter 42 stift- bzw. keilförmig ausgestaltet und gegenüber einander kreisförmig angeordnet (vgl. Figur 16). Die Ausrichter 42 sind radial verfahrbar ausgebildet. Beim Einfahren zwischen die einzelnen Reihen von Leiterstücken 20 werden die Ausrichter radial einwärts bewegt und kontaktieren in umfänglicher Richtung je benachbarte Reihen von Leiterstücken 20.

Die Ausrichter 42 können aber auch analog zu den Aufnehmern 30 der Ausrichteinrichtung 26 gabelförmig und einstückig oder aus mehreren Teilen aufgebaut, ausgestaltet sein.

Im geöffneten Zustand der zweiten Ausrichteinrichtung 38 befinden sich die Ausrichter 42 radial außerhalb der Leiterstückreihen. Im geschlossenen bzw. betätigten Zustand der zweiten Ausrichteinrichtung 38 fahren die Ausrichter 42 zwischen die Leiterstückreihen, so dass ein Anschlag für die Leiterstückreihen in radialer Richtung von außen und in umlaufender Richtung gebildet wird. Dies ist analog zu den in Fig. 4 dargestellten Aufnehmern 30.

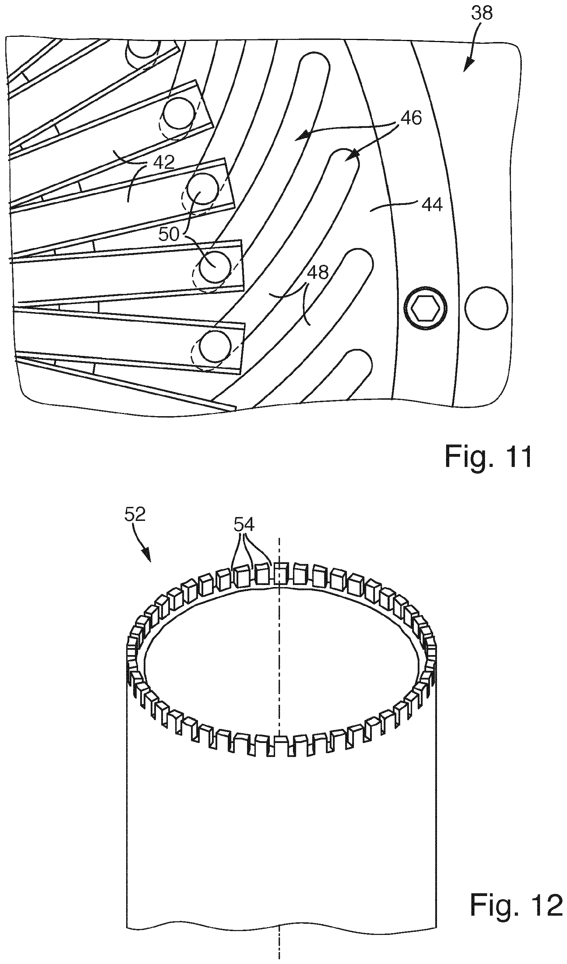

Figur 11 zeigt einen Ausschnitt einer Draufsicht auf die zweite Ausrichteinheit 38 gemäß Fig. 10. Es ist ein Kulissenelement 44 abgebildet. Das Kulissenelement 44 weist eine Vielzahl von Kulissenbahnen 46 auf. Die Anzahl der Kulissenbahnen 46 entspricht der Anzahl der Ausrichter 42. Jeder Ausrichter 42 weist einen Fortsatz 50 auf, der jeweils in eine Kulissenbahn 46 eingreift und im vorliegenden Beispiel auf dem den Leiterstückreihen abgewandten Ende angeordnet ist.

Durch eine Rotationsbewegung des Kulissenelements 44, bewegen sich die Fortsätze 50 auf den Kulissenbahnen 46 und somit die Ausrichter 42 in radialer Richtung. In der Greifvorrichtung 22 ist ein entsprechend ausgebildeter Betätigungsmechanismus mit einem Kulissenbahnen tragenden Kulissenelement vorgesehen. Die Aufnehmer 30 greifen in analoger Weise mit entsprechenden Fortsätzen in die Kulissenbahnen dieses Kulissenelements ein. Durch Rotation des Kulissenelements bspw. über einen entsprechenden Aktuator sind die Aufnehmer 30 radial bewegbar.

Jeder der Ausrichter 42 wird in einer vorliegend rinnenartig ausgebildeten Richtungsgebereinrichtung 48 geführt. Die Richtungsgebereinrichtung 48 ist derart ausgestaltet, dass die Ausrichter 42 in radialer Richtung geführt bewegbar sind.

Für die Aufnehmer 30 der Greifvorrichtung 22 ist vorgesehen, dass diese durch einen Eingriff eines entsprechenden Fortsatzes in eine radial erstreckte Führung in radialer Richtung geführt bewegbar sind.

Die in Figur 10 abgebildete Verdreheinrichtung 40 umfasst je Leiterstück 20 einer Leiterstückreihe (im vorliegenden Beispiel also 4) eine Verdreheinheit 52. Die Verdreheinheiten 52 sind konzentrisch zueinander angeordnet und können gegeneinander in umlaufender Richtung rotiert werden.

Figur 12 zeigt einen Ausschnitt einer perspektivischen Ansicht auf die Verdreheinheit 52 gemäß Fig. 10. Es ist das den Leiterstücken 20 zugewandte Ende der Verdreheinheit 52 dargestellt. Dieses Ende ist mit Aussparungen 54 versehen, in die die verbindungsabschnittsabgewandten Enden der Schenkelabschnitte der Leiterstücke 20 eingreifen, wenn diese in den Statorkern 24 eingesetzt sind. Durch eine Relativdrehung der Verdreheinheiten 52 zueinander werden die verbindungsabschnittsabgewandten Enden der Schenkelabschnitte der Leiterstücke 20, die in den Aussparungen 54 einer Verdreheinheit 52 aufgenommen sind, gegen die verbindungsabschnittsabgewandten Enden der Schenkelabschnitte der Leiterstücke 20, die in den Aussparungen 54 einer anderen Verdreheinheit 52 aufgenommen sind, verdreht.

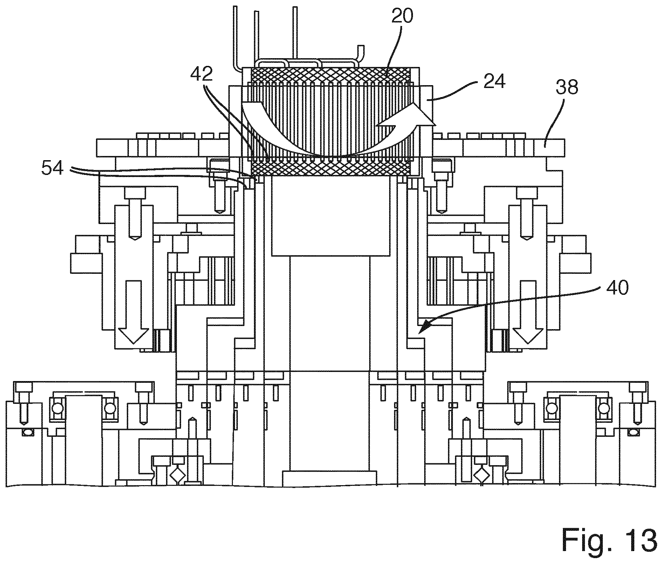

Figur 13 zeigt einen Querschnitt auf den Statorkern 24, die zweite Ausrichteinrichtung 38 und die Verdreheinrichtung 40 gemäß Fig. 9. Hier ist der Verdrehvorgang dargestellt.

Der verdrehte Bereich der verbindungsabschnittsabgewandten Enden der Schenkelabschnitte der Leiterstücke 20 wird durch zwei Anschläge definiert. Der erste Anschlag in umlaufender Richtung wird durch die Aussparungen 54 der Verdreheinheiten 52 gebildet. Der zweite Anschlag wird durch die Ausrichter 42 gebildet, die sich beim Schließen der zweiten Ausrichteeinrichtung 38 zwischen die Leiterstückreihen schieben. Es ist denkbar, dass sowohl die Aussparungen 54 als auch die Ausrichter 42 besonders geformte, z. B. abgerundete, Ecken und/oder Kanten aufweisen. Durch ein Variieren der Form der Ecken und/oder Kanten kann der Knickbereich in umlaufender Richtung wunschgemäß gestaltet werden. So ist z. B. ein möglichst kleiner (durch scharfe Ecken und/oder Kanten) oder ein möglichst großer Knick (durch runde Ecken und/oder Kanten) möglich.

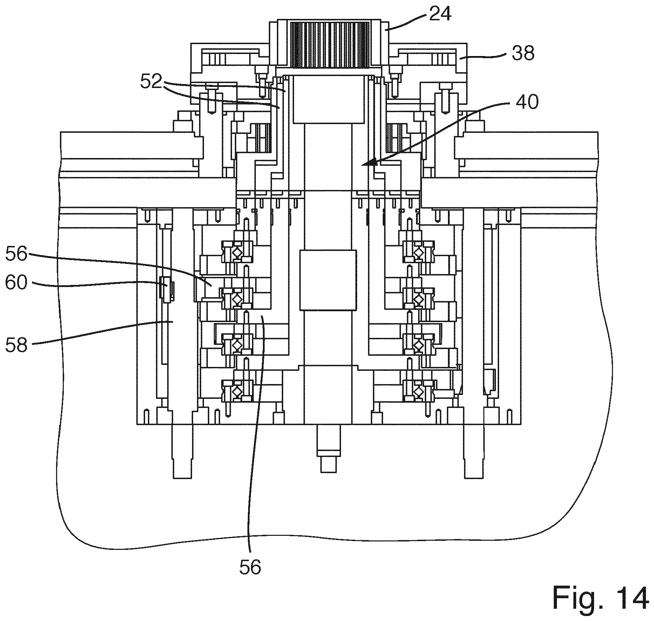

Figur 14 zeigt einen Querschnitt durch den Statorkern 24, die zweite Ausrichteinrichtung 38 und die Verdreheinrichtung 40 gemäß Fig. 9. Es sind ebenfalls die einzelnen Verdreheinheiten 52 abgebildet. Diese sind zylinderförmig und fluchtend ineinander angeordnet. Die Verdreheinheiten 52 kragen radial nach außen aus und weisen jeweils einen radial erstreckten, plattenartigen Abschnitt 56 auf. Die Abschnitte 56 weisen einen radial außenliegenden Zahnabschnitt auf.

Des Weiteren ist jeder Verdreheinheit 52 eine Antriebseinheit 58 zugeordnet. Jede Antriebseinheit 58 verfügt über ein Zahnradelement 60, welches in den radial außenliegenden Zahnabschnitt eines plattenartigen Abschnitts 56 eingreift. Über die Antriebseinheiten 58 sind die jeweiligen Verdreheinheiten 52 rotierbar.

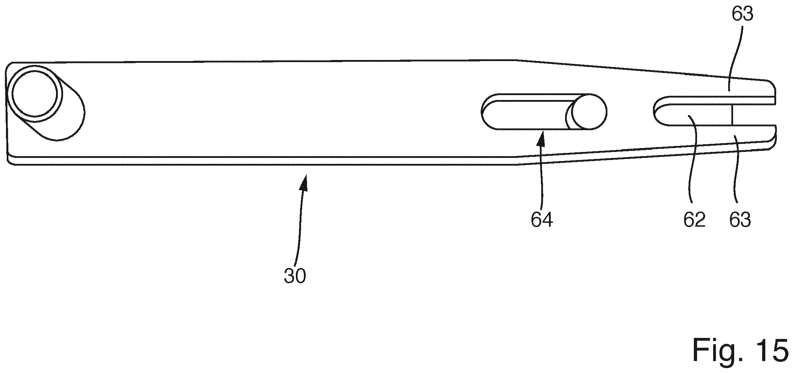

Figur 15 zeigt eine perspektivische Ansicht eines Aufnehmers 30. In dieser Ausführungsform ist der Aufnehmer 30 gabelförmig, aus mehreren Teilen bestehend, ausgeführt. Der Aufnehmer 30 weist ein federnd gelagertes Element 62 auf. Das federnd gelagerte Element 62 ist mittig in der Gabel (zwischen zwei Gabelarmen 63) angeordnet.

Das Element 62 bildet den ersten (äußeren) radialen Anschlag für eine Leiterstückereihe. Der maximal bzw. minimal mögliche Ausschlag des mittleren Elements 62 in axialer Richtung wird durch die Begrenzeinrichtung 64 vorgegeben. Eine in der Gabel angeordnetes Federelement drängt das Element 62 radial auswärts.

Es können Leiterstückreihen mit unterschiedlichen Anzahlen an Leiterstücken 20 bzw. Schenkelabschitten erfasst werden. Das Element 62, das zwischen seinem maximalen bzw. minimalen Ausschlag beweglich ist, nimmt dabei die Rolle eines Puffers ein, um die unterschiedlichen Anzahlen an Schenkelabschnitten innerhalb einer Leiterstück Reihe auszugleichen.

Figur 16 zeigt eine perspektivische Ansicht des mit Leiterstücken 20 bestückten Stators 24 nebst zwei Ausrichtern 42. Im vorliegenden Beispiel sind die Ausrichter 42 stift- bzw. keilförmig ausgestaltet und gegenüber einander kreisförmig angeordnet. Die Ausrichter 42 fahren vor dem Verdrehvorgang unterhalb des Statorkerns 24 zwischen die einzelnen Leiterstückreihen und bilden beim Verdrehvorgang einen Anschlag bzw. eine Fixierung für die Leiterstücke 20.

## Patentansprüche

1. Vorrichtung (10) zur Bestückung eines Statorkerns (24) mit Leiterstücken (20), vorzugsweise mit Hairpins, die insbesondere mit rechteckigem Leiterquerschnitt ausgebildet sind, wobei die Vorrichtung (10) umfasst:
eine Aufnahme (16) zur spielbehafteten Aufnahme der Leiterstücke (20) in einer Konfiguration, die einer zum Einsetzen in einen Statorkern (24) vorgesehenen Konfiguration der Leiterstücke (20) entspricht, wobei die Leiterstücke (20) in der vorgesehenen Konfiguration in der Aufnahme (16) in radial erstreckten Reihenanordnungen angeordnet sind;
insbesondere wenigstens eine Bestückeinrichtung (14), die ausgebildet und angeordnet ist, um die Aufnahme (16) mit Leiterstücken (20) zu bestücken, und die insbesondere greiferbasiert ausgebildet ist,
eine Greifvorrichtung (22), die ausgebildet und angeordnet ist, um die in der Aufnahme (16) spielbehaftet gehaltenen Leiterstücke (20) aus dieser zu entnehmen, und in einer vorgesehenen endgültigen Anordnung in den Statorkern (24) einzusetzen, sowie eine Statorkernaufnahme zur Aufnahme eines Statorkerns (24), in den die Leiterstücke (20) einzusetzen sind,
wobei
die Greifvorrichtung (22) eine Ausrichteinrichtung (26) umfasst, wobei die Ausrichteinrichtung (26) ausgebildet ist, um in einem Greifvorgang mehrere in der Aufnahme (16) spielbehaftet gehaltene und radial erstreckt angeordnete Leiterstückreihen
jeweils in ihrer vorgesehenen Reihenanordnung aneinander anliegend radial erstreckt auszurichten, indem die Ausrichteinrichtung (26) für die Leiterstücke (20) der jeweiligen Reihenanordnung einen radialen Anschlag auf einer ersten radialen Seite bildet und weiter einen beidseitigen umfänglichen Anschlag bildet,
wobei die Greifvorrichtung (22) weiter eine von der Ausrichteinrichtung (26) separat ausgebildete Gegenlagereinrichtung (28) umfasst, die ausgebildet und angeordnet ist, um in dem Greifvorgang der Greifvorrichtung (22) einen radialen Anschlag auf einer zweiten, der ersten radialen Seite gegenüberliegend angeordneten, radialen Seite zu bilden, und
wobei die Greifvorrichtung (22) ausgebildet ist, um die Leiterstücke (20) der jeweiligen Reihenanordnung zwischen dem radialen Anschlag der Ausrichteinrichtung (26) und dem radialen Anschlag der Gegenlagereinrichtung (28) klemmend zu fixieren,wobei die Ausrichteinrichtung (26) mehrere gabelförmige Aufnehmer (30) aufweist, die jeweils dazu ausgebildet und angeordnet sind die Leiterstücke (20) einer Reihenanordnung zu erfassen,
wobei die Greifvorrichtung (22) derart ausgebildet ist, dass die jeweiligen gabelförmigen Aufnehmer (30) im Greifvorgang jeweils in radialer Richtung auf die Leiterstücke (20) einer jeweiligen Reihenanordnung aufgeschoben werden.

2. Vorrichtung (10) nach dem vorigen Anspruch, **dadurch gekennzeichnet, dass** die gabelförmigen Aufnehmer (30) jeweils über einen Fortsatz (50) in eine Kulissenbahn eingreifen, wobei insbesondere mehrere Kulissenbahnen (46) , insbesondere alle Kulissenbahnen (46) , in einem Kulissenelement (44) angeordnet sind, wobei die Kulissenbahnen (46) derart auf dem Kulissenelement (44) angeordnet sind, dass die Aufnehmer (30) durch eine Rotationsbewegung des Kulissenelements in radialer Richtung bewegbar sind, wobei die gabelförmigen Aufnehmer (30) jeweils über eine Richtungsgebereinrichtung (48) derart geführt sind, dass sie lediglich in radialer Richtung innerhalb der Greifvorrichtung (22) bewegbar sind.

3. Vorrichtung (10) nach einem der vorigen Ansprüche, **dadurch gekennzeichnet, dass** die Ausrichteinrichtung (26) und die Gegenlagereinrichtung (28) jeweils ausgebildet und angeordnet sind, um an den hairpinförmigen Leiterstücken (20) jeweils an den Schenkelabschnitten anzugreifen, wenn diese in der Aufnahme (16) angeordnet sind.

4. Vorrichtung (10) nach einem der vorigen Ansprüche, **dadurch gekennzeichnet, dass** die Gegenlagereinrichtung (28) einen Zylinder (32) mit radial schwenkbaren oder biegsamen Fingern (34), die jeweils als radiale Anschläge der Gegenlagereinrichtung (28) dienen, umfasst.

5. Vorrichtung (10) nach einem der vorigen Ansprüche, **dadurch gekennzeichnet, dass** die Gegenlagereinrichtung (28) zwei axial zueinander bewegliche Elemente umfasst, durch deren Relativbewegung zueinander die radialen Anschläge der Gegenlagereinrichtung (28) in radialer Richtung bewegbar sind.

6. Vorrichtung (10) nach einem der vorigen Ansprüche, **dadurch gekennzeichnet, dass** die Vorrichtung (10) weiter einen Initialgreifer(18) umfasst, der ausgebildet ist, um die Leiterstücke (20) in der Aufnahme (16) in einer vorgesehenen Konfiguration auszurichten, so dass diese von der Greifvorrichtung (22) erfasst und entnommen werden können, insbesondere wobei der Initialgreifer (18) zwei halbschalenförmige Greifelemente umfasst, wobei der Initialgreifer (18) stationär im Bereich der Aufnahme (16) angeordnet ist.

7. Vorrichtung (10) nach einem der vorigen Ansprüche, **dadurch gekennzeichnet, dass** die Vorrichtung (10) eine Verdreheinrichtung (40) umfasst, die angeordnet und ausgebildet ist, um verbindungsabschnittsabgewandte Enden der Schenkelabschnitte der hairpinförmigen Leiterstücke (20) zu erfassen, wenn diese im Statorkern (24) eingesetzt sind, und durch eine Rotationsbewegung in umfänglicher Richtung zu Verformen.

8. Vorrichtung (10) nach dem vorigen Anspruch, **dadurch gekennzeichnet, dass** die Verdreheinrichtung (40)wenigstens zwei, insbesondere zylinderartig, ausgebildete Verdreheinheiten (52) umfasst, die jeweils ausgebildet sind, um eine Mehrzahl, vorzugsweise alle, auf einer Kreisbahn angeordneten Enden der Schenkelabschnitte der hairpinförmigen Leiterstücke (20) zu erfassen und durch eine Rotationsbewegung in umfänglicher Richtung zu Verformen, insbesondere wobei jeweils in radialer Richtung nebeneinander liegende Verdreheinheiten (52) in gegenläufiger umfänglicher Richtung bewegbar sind, so dass die Enden der Schenkelabschnitte der hairpinförmigen Leiterstücke (20) in jeweils radial aufeinander folgenden Kreisbahnen in gegenläufiger umfänglicher Richtung verformbar sind.

9. Vorrichtung (10) nach dem vorigen Anspruch, **dadurch gekennzeichnet, dass** die Verdreheinheiten (52) von einem zylinderförmigen, den Leiterstücken (20) zugewandten Abschnitt jeweils nach radial auswärts auskragen und einen radial erstreckten plattenartigen Abschnitt (56) aufweisen, insbesondere wobei die radial erstreckten plattenartige Abschnitte (56) jeweils einen radial außenliegenden Zahnabschnitt aufweisen und die Vorrichtung (10) weiterhin je Verdreheinheit (52) eine Antriebseinheit (58) umfasst, die jeweils über ein Zahnradelement (60) in den radial außenliegenden Zahnabschnitt des jeweiligen plattenartigen Abschnitts (56) eingreift, um die Rotationsbewegung der einzelnen Verdreheinheiten (52) zu bewirken.

10. Vorrichtung (10) nach dem vorigen Anspruch, **dadurch gekennzeichnet, dass** die zylinderförmigen, den Leiterstücken (20) zugewandten Abschnitte der Verdreheinheiten (52) jeweils konzentrisch ineinander liegen.

11. Vorrichtung (10) nach einem der vorigen Ansprüche, **dadurch gekennzeichnet, dass** die Greifvorrichtung (22) die Leiterstücke (20) von einer ersten Seite her in den Statorkern (24) einsetzt und dass die Verdreheinrichtung (40) auf einer gegenüberliegenden zweiten Seite des Statorkerns (24) angeordnet ist.

12. Vorrichtung (10) nach dem vorigen Anspruch, **dadurch gekennzeichnet, dass** zwischen Verdreheinrichtung (40) und Statorkern (24) eine zweite Ausrichteinrichtung (38) angeordnet ist, die ausgebildet und angeordnet ist, um jeweils Ausrichter (42) zwischen die einzelnen Reihenanordnungen der Leiterstücke (20) einzufahren.

13. Vorrichtung (10) nach dem vorherigen Anspruch, **dadurch gekennzeichnet, dass** die Ausrichter (42) jeweils über einen Fortsatz (50) in eine Kulissenbahn (46) eingreifen, wobei insbesondere mehrere Kulissenbahnen (46), insbesondere alle Kulissenbahnen (46), in einem Kulissenelement (44) angeordnet sind, wobei die Kulissenbahnen (46) derart auf dem Kulissenelement (44) angeordnet sind, dass die Ausrichter (42) durch eine Rotationsbewegung des Kulissenelements (44) in radialer Richtung bewegbar sind, wobei die Ausrichter (42) jeweils über eine Richtungsgebereinrichtung (48) derart geführt sind, dass sie lediglich in radialer Richtung innerhalb der zweiten Ausrichteinrichtung (38) bewegbar sind.

14. Vorrichtung (10) nach einem der vorigen Ansprüche, **dadurch gekennzeichnet, dass** die Vorrichtung (10) eine Maschinenbasis (12) umfasst, wobei auf der Maschinenbasis (12) die Bestückeinrichtung (14), die Aufnahme (16), die Greifvorrichtung (22) mit einer ersten Ausrichteinrichtung (26), die Statorkernaufnahme, die Verdreheinrichtung (40) und eine zweite Ausrichteinrichtung (38) angeordnet sind.

15. Verfahren zur Bestückung eines Statorkerns (24) mit Leiterstücken (20), vorzugsweise mit Hairpins, die insbesondere mit rechteckigem Leiterquerschnitt ausgebildet sind, wobei das Verfahren die folgenden Schritte umfasst:
Bestücken einer Aufnahme (16) mit Leiterstücken (20) mittels einer Bestückeinrichtung (14) in einer Konfiguration, die einer zum Einsetzen in einen Statorkern (24) vorgesehenen Konfiguration der Leiterstücke (20) entspricht, wobei die Leiterstücke (20) in der vorgesehenen Konfiguration in der Aufnahme (16) in radial erstreckten Reihenanordnungen angeordnet werden;
Platzieren einer Greifvorrichtung (22) über der Aufnahme (16) und der in der Aufnahme (16) angeordneten Leiterstücken (20),
Greifen der in der Aufnahme (16) gehaltenen Leiterstücke (20) in einer vorgesehenen endgültigen Anordnung für den Einsatz in den Statorkern (24) mittels einer Ausrichteinrichtung (26) und einer Gegenlagereinrichtung (28),
Entnahme der Leiterstücke (20) in einer vorgesehenen endgültigen Anordnung für den Einsatz in den Statorkern (24) aus der Aufnahme (16) durch die Greifvorrichtung (22),
Verfahren der Greifvorrichtung (22) und der darin fixierten Leiterstücke (20) über den Statorkern (24),
teilweise Einsetzen der Leiterstücke (20) in den Statorkern (24) durch die Greifvorrichtung (22),
Lösen des Griffs durch die Ausrichteinrichtung (26) und die Gegenlagereinrichtung (28), so dass die Leiterstücke (20) lediglich vom Statorkern (24) gehalten werden,
Einsetzen der Leiterstücke (20) in den Statorkern (24) bis zur finalen Einsetztiefe,
Ausrichten der Leiterstücke (20) mittels einer zweiten Ausrichteinrichung (38) unterhalb des Statorkerns (24)
und anschließendem
Verdrehen verbindungsabschnittsabgewandter Enden der Schenkelabschnitte der hairpinförmigen Leiterstücke (20) mittels einer Verdreheinrichtung (40), die sich unterhalb der zweiten Ausrichteinrichtung (38) befindet, wobei zur Durchführung des Verfahrens eine Vorrichtung (10) nach einem der Ansprüche 1 bis 14 verwendet wird.

16. Verfahren nach Anspruch 15, **dadurch gekennzeichnet, dass** vor dem Greifen durch die Greifvorrichtung (22) die Leiterstücke (20) innerhalb der Aufnahme (16) in einem zusätzlichen Verfahrensschritt mittels eines Initialgreifers (18) ausgerichtet werden.

## Claims

1. Device (10) for populating a stator core (24) with conductor pieces (20), preferably with hairpins, which are designed in particular with a rectangular conductor cross section, wherein the device (10) comprises:
a receptacle (16) for receiving the conductor pieces (20) with play in a configuration that corresponds to a configuration of the conductor pieces (20) that is intended for insertion into a stator core (24), wherein the conductor pieces (20) are arranged in the receptacle (16) in radially extending row arrangements in the intended configuration;
in particular at least one populating device (14) which is designed and arranged to populate the receptacle (16) with conductor pieces (20), and which in particular has a gripper-based design,
a gripping device (22) which is designed and arranged to remove the conductor pieces (20) held with play in the receptacle (16) from said receptacle, and to insert them into the stator core (24) in an intended final arrangement,
and a stator core receptacle for receiving a stator core (24) into which the conductor pieces (20) are to be inserted,
wherein the gripping device (22) comprises an alignment device (26), wherein the alignment device (26) is designed to align, in a gripping process, a plurality of conductor piece rows, which are held with play in the receptacle (16) and are arranged extending radially, in each case in their intended row arrangement so as to be adjacent to one another and extend radially, in that the alignment device (26) forms a radial stop on a first radial side for the conductor pieces (20) of the relevant row arrangement, and further forms a peripheral stop on both sides,
wherein the gripping device (22) further comprises a counter-bearing device (28) formed separately from the alignment device (26), which counter-bearing device is designed and arranged to form a radial stop on a second radial side, arranged opposite the first radial side, in the gripping process of the gripping device (22), and
wherein the gripping device (22) is designed to fix the conductor pieces (20) of the relevant row arrangement in a clamping manner between the radial stop of the alignment device (26) and the radial stop of the counter-bearing device (28), wherein the alignment device (26) has a plurality of fork-shaped receivers (30) which are each designed and arranged to grasp the conductor pieces (20) of a row arrangement,
wherein the gripping device (22) is designed such that the respective fork-shaped receivers (30) are each pushed in the radial direction onto the conductor pieces (20) of a relevant row arrangement in the gripping process.

2. Device (10) according to the preceding claim, **characterized in that** the fork-shaped receivers (30) each engage in a slotted guide track via a projection (50), wherein in particular a plurality of slotted guide tracks (46), in particular all of the slotted guide tracks (46), are arranged in a slotted guide element (44), wherein the slotted guide tracks (46) are arranged on the slotted guide element (44) such that the receivers (30) are movable in a radial direction via a rotational movement of the slotted guide element, wherein the fork-shaped receivers (30) are each guided via a direction setting device (48) in such a way that they are movable only in the radial direction within the gripping device (22).

3. Device (10) according to any one of the preceding claims, **characterized in that** the alignment device (26) and the counter-bearing device (28) are each designed and arranged to engage on the hairpin-shaped conductor pieces (20), in each case on the leg portions, when they are arranged in the receptacle (16).

4. Device (10) according to any one of the preceding claims, **characterized in that** the counter-bearing device (28) comprises a cylinder (32) having radially pivotable or flexible fingers (34) that each serve as radial stops of the counter-bearing device (28).

5. Device (10) according to any one of the preceding claims, **characterized in that** the counter-bearing device (28) comprises two elements which are axially movable with respect to one another, by means of the relative movement of which elements with respect to one another the radial stops of the counter-bearing device (28) are movable in a radial direction.

6. Device (10) according to any one of the preceding claims, **characterized in that** the device (10) further comprises an initial gripper (18) which is designed to align the conductor pieces (20) in the receptacle (16) in an intended configuration so that they can be grasped and removed by the gripping device (22), in particular wherein the initial gripper (18) comprises two half shell-shaped gripping elements, wherein the initial gripper (18) is arranged so as to be stationary in the region of the receptacle (16).

7. Device (10) according to any one of the preceding claims, **characterized in that** the device (10) comprises a rotation device (40) which is arranged and designed to grasp ends of the leg portions of the hairpin-shaped conductor pieces (20) that face away from the connection portion when the conductor pieces are inserted in the stator core (24), and to deform said ends via a rotational movement in the circumferential direction.

8. Device (10) according to the preceding claim, **characterized in that** the rotation device (40) comprises at least two, in particular cylindrical, rotation units (52) which are each designed to grasp a plurality of, preferably all, ends of the leg portions of the hairpin-shaped conductor pieces (20) that are arranged on a circular path, and to deform said ends via a rotational movement in the circumferential direction, in particular wherein rotation units (52) situated next to one another in the radial direction are each movable in the opposite circumferential direction, so that the ends of the leg portions of the hairpin-shaped conductor pieces (20) are deformable in opposite circumferential directions in respective radially successive circular paths.

9. Device (10) according to the preceding claim, **characterized in that** the rotation units (52) each project radially outward from a cylindrical portion facing toward the conductor pieces (20) and have a radially extending plate-like portion (56), in particular wherein the radially extending plate-like portions (56) each have a radially outer tooth portion and the device (10) furthermore comprises a drive unit (58) per rotation unit (52), which drive unit in each case engages in the radially outer tooth portion of the relevant plate-like portion (56) via a gearwheel element (60) in order to effect the rotational movement of the individual rotation units (52).

10. Device (10) according to the preceding claim, **characterized in that** the cylindrical portions of the rotation units (52) facing toward the conductor pieces (20) are each concentrically situated inside one another.

11. Device (10) according to any one of the preceding claims, **characterized in that** the gripping device (22) inserts the conductor pieces (20) from a first side into the stator core (24), **and in that** the rotation device (40) is arranged on an opposite second side of the stator core (24).

12. Device (10) according to the preceding claim, **characterized in that** a second alignment device (38) is arranged between the rotation device (40) and the stator core (24), which second alignment device is designed and arranged in order to insert aligners (42) between the individual row arrangements of the conductor pieces (20) in each case.

13. Device (10) according to the preceding claim, **characterized in that** the aligners (42) each engage in a slotted guide track (46) via a projection (50), wherein in particular a plurality of slotted guide tracks (46), in particular all of the slotted guide tracks (46), are arranged in a slotted guide element (44), wherein the slotted guide tracks (46) are arranged on the slotted guide element (44) in such a way that the aligners (42) are movable in a radial direction via a rotational movement of the slotted guide element (44), wherein the aligners (42) are each guided via a direction setting device (48) in such a way that they are movable only in a radial direction within the second alignment device (38).

14. Device (10) according to any one of the preceding claims, **characterized in that** the device (10) comprises a machine base (12), wherein the population device (14), the receptacle (16), the gripping device (22) having a first alignment device (26), the stator core receptacle, the rotation device (40), and a second alignment device (38) are arranged on the machine base (12).

15. Method for populating a stator core (24) with conductor pieces (20), preferably with hairpins, which are designed in particular with a rectangular conductor cross section, wherein the method comprises the following steps:
populating a receptacle (16) with conductor pieces (20), by means of a population device (14), in a configuration which corresponds to a configuration of the conductor pieces (20) that is intended for insertion into a stator core (24), wherein the conductor pieces (20) are arranged in the receptacle (16) in radially extending row arrangements in the intended configuration;
placing a gripping device (22) over the receptacle (16) and the conductor pieces (20) arranged in the receptacle (16),
gripping the conductor pieces (20), which are held in the receptacle (16), in an intended final arrangement for insertion into the stator core (24), by means of an alignment device (26) and a counter-bearing device (28),
removing the conductor pieces (20), in an intended final arrangement for insertion into the stator core (24), from the receptacle (16) by means of the gripping device (22),
moving the gripping device (22) and the conductor pieces (20) fixed therein over the stator core (24),
partially inserting the conductor pieces (20) into the stator core (24) by means of the gripping device (22),
releasing the grip by the alignment device (26) and the counter-bearing device (28), so that the conductor pieces (20) are held only by the stator core (24),
inserting the conductor pieces (20) into the stator core (24) to the final insertion depth,
aligning the conductor pieces (20) by means of a second alignment device (38) below the stator core (24)
and subsequently
rotating ends of the leg portions of the hairpin-shaped conductor pieces (20) that face away from the connection portion by means of a rotation device (40) which is located below the second alignment device (38), wherein a device (10) according to any one of claims 1 to 14 is used to carry out the method.

16. Method according to claim 15, **characterized in that,** before the gripping by the gripping device (22), the conductor pieces (20) within the receptacle (16) are aligned in an additional method step by means of an initial gripper (18).

## Revendications

1. Dispositif (10) pour équiper un noyau statorique (24) de pièces conductrices (20), de préférence d'épingles à cheveux, qui sont réalisées en particulier avec une section transversale conductrice rectangulaire, dans lequel le dispositif (10) comprend :
un logement (16) pour la réception avec jeu des pièces conductrices (20) dans une configuration qui correspond à une configuration des pièces conductrices (20) prévue pour l'insertion dans un noyau statorique (24), dans lequel les pièces conductrices (20) dans la configuration prévue sont disposées dans le logement (16) dans des dispositions en rangées étendues radialement ;
en particulier au moins un système d'équipement (14), qui est réalisé et disposé pour équiper le logement (16) de pièces conductrices (20), et qui est réalisé en particulier à base de pinces,
un dispositif de préhension (22), qui est réalisé et disposé pour prélever les pièces conductrices (20) retenues avec jeu dans le logement (16) de celui-ci, et pour les insérer dans le noyau statorique (24) dans une disposition définitive prévue,
ainsi qu'un logement de noyau statorique pour la réception d'un noyau statorique (24), dans lequel les pièces conductrices (20) sont à insérer,
dans lequel
le dispositif de préhension (22) comprend un système d'orientation (26), dans lequel le système d'orientation (26) est réalisé pour orienter dans un processus de préhension plusieurs rangées de pièces conductrices retenues avec jeu dans le logement (16) et disposées de manière étendue radialement respectivement de manière étendue radialement de façon à s'appliquer les unes contre les autres dans leur disposition en rangée prévue, du fait que le système d'orientation (26) forme pour les pièces conductrices (20) de la disposition en rangée respective une butée radiale sur une première face radiale et forme en outre une butée périphérique bilatérale,
dans lequel le dispositif de préhension (22) comprend en outre un système de contre-appui (28) réalisé séparément du système d'orientation (26), qui est réalisé et disposé pour former dans le processus de préhension du dispositif de préhension (22) une butée radiale sur une deuxième face radiale, disposée à l'opposé de la première face radiale, et
dans lequel le dispositif de préhension (22) est réalisé pour fixer avec serrage les pièces conductrices (20) de la disposition en rangée respective entre la butée radiale du système d'orientation (26) et la butée radiale du système de contre-appui (28), dans lequel le système d'orientation (26) présente plusieurs ramasseurs (30) en forme de fourche, qui sont réalisés et disposés respectivement pour saisir les pièces conductrices (20) d'une disposition en rangée,
dans lequel le dispositif de préhension (22) est réalisé de telle sorte que les ramasseurs (30) en forme de fourche respectifs sont poussés dans le processus de préhension respectivement dans la direction radiale sur les pièces conductrices (20) d'une disposition en rangée respective.

2. Dispositif (10) selon la revendication précédente, **caractérisé en ce que** les ramasseurs (30) en forme de fourche s'insèrent respectivement par l'intermédiaire d'un prolongement (50) dans une voie de coulisse, dans lequel en particulier plusieurs voies de coulisse (46), en particulier toutes les voies de coulisse (46), sont disposées dans un élément de coulisse (44), dans lequel les voies de coulisse (46) sont disposées sur l'élément de coulisse (44) de telle sorte que les ramasseurs (30) peuvent être déplacés par un mouvement de rotation de l'élément de coulisse dans la direction radiale, dans lequel les ramasseurs (30) en forme de fourche sont guidés respectivement par l'intermédiaire d'un système transmetteur de direction (48), de telle sorte qu'ils peuvent être déplacés uniquement dans la direction radiale à l'intérieur du dispositif de préhension (22).

3. Dispositif (10) selon l'une quelconque des revendications précédentes, **caractérisé en ce que** le système d'orientation (26) et le système de contre-appui (28) sont réalisés et disposés respectivement pour agir sur les pièces conductrices (20) en forme d'épingles à cheveux respectivement sur les parties branches, lorsque celles-ci sont disposées dans le logement (16).

4. Dispositif (10) selon l'une quelconque des revendications précédentes, **caractérisé en ce que** le système de contre-appui (28) comprend un cylindre (32) avec des doigts (34) radialement pivotants ou flexibles, qui servent respectivement de butées radiales du système de contre-appui (28) .

5. Dispositif (10) selon l'une quelconque des revendications précédentes, **caractérisé en ce que** le système de contre-appui (28) comprend deux éléments mobiles axialement l'un par rapport à l'autre, par le mouvement relatif desquels l'un par rapport à l'autre les butées radiales du système de contre-appui (28) peuvent être déplacées dans la direction radiale.

6. Dispositif (10) selon l'une quelconque des revendications précédentes, **caractérisé en ce que** le dispositif (10) comprend en outre une pince initiale (18), qui est réalisée pour orienter les pièces conductrices (20) dans le logement (16) dans une configuration prévue, de sorte que celles-ci peuvent être saisies et prélevées par le dispositif de préhension (22), en particulier dans lequel la pince initiale (18) comprend deux éléments de préhension en forme de demi-coque, dans lequel la pince initiale (18) est disposée de manière fixe dans la zone du logement (16).

7. Dispositif (10) selon l'une quelconque des revendications précédentes, **caractérisé en ce que** le dispositif (10) comprend un système de torsion (40), qui est disposé et réalisé pour saisir les extrémités opposées aux parties de liaison des parties branches des pièces conductrices (20) en forme d'épingles à cheveux, lorsque celles-ci sont insérées dans le noyau statorique (24), et pour les déformer par un mouvement de rotation dans la direction périphérique.

8. Dispositif (10) selon la revendication précédente, **caractérisé en ce que** le système de torsion (40) comprend au moins deux unités de torsion (52), réalisées en particulier à la façon d'un cylindre, qui sont réalisées respectivement pour saisir une pluralité, de préférence toutes les extrémités des parties branches des pièces conductrices (20) en forme d'épingles à cheveux disposées sur une trajectoire circulaire et pour les déformer par un mouvement de rotation dans la direction périphérique, en particulier dans lequel des unités de torsion (52) respectivement situées l'une à côté de l'autre dans la direction radiale peuvent être déplacées dans la direction périphérique contraire, de sorte que les extrémités des parties branches des pièces conductrices (20) en forme d'épingles à cheveux sont déformables dans des trajectoires circulaires se succédant respectivement radialement dans la direction périphérique contraire.

9. Dispositif (10) selon la revendication précédente, **caractérisé en ce que** les unités de torsion (52) font saillie respectivement radialement vers l'extérieur d'une partie cylindrique, tournée vers les pièces conductrices (20) et présentent une partie du type plaque (56) étendue radialement, en particulier dans lequel les parties du type plaque (56) étendues radialement présentent respectivement une partie dentée radialement extérieure et le dispositif (10) comprend en outre par unité de torsion (52) une unité d'entraînement (58), qui s'insère respectivement par l'intermédiaire d'un élément roue dentée (60) dans la partie dentée radialement extérieure de la partie du type plaque (56) respective, afin de provoquer le mouvement de rotation des unités de torsion (52) individuelles.

10. Dispositif (10) selon la revendication précédente, **caractérisé en ce que** les parties cylindriques des unités de torsion (52) tournées vers les pièces conductrices (20) se situent respectivement de manière concentrique les unes dans les autres.

11. Dispositif (10) selon l'une quelconque des revendications précédentes, **caractérisé en ce que** le dispositif de préhension (22) insère les pièces conductrices (20) à partir d'une première face dans le noyau statorique (24) et que le système de torsion (40) est disposé sur une deuxième face opposée du noyau statorique (24).

12. Dispositif (10) selon la revendication précédente, **caractérisé en ce qu'**un deuxième système d'orientation (38), qui est réalisé et disposé pour rentrer respectivement des orienteurs (42) entre les dispositions en rangée individuelles des pièces conductrices (20), est disposé entre le système de torsion (40) et le noyau statorique (24).

13. Dispositif (10) selon la revendication précédente, **caractérisé en ce que** les orienteurs (42) s'insèrent respectivement par l'intermédiaire d'un prolongement (50) dans une voie de coulisse (46), dans lequel en particulier plusieurs voies de coulisse (46), en particulier toutes les voies de coulisse (46), sont disposées dans un élément de coulisse (44), dans lequel les voies de coulisse (46) sont disposées sur l'élément de coulisse (44), de telle sorte que les orienteurs (42) peuvent être déplacés par un mouvement de rotation de l'élément de coulisse (44) dans la direction radiale, dans lequel les orienteurs (42) sont guidés respectivement par l'intermédiaire d'un système transmetteur de direction (48), de telle sorte qu'ils peuvent être déplacés uniquement dans la direction radiale à l'intérieur du deuxième système d'orientation (38).

14. Dispositif (10) selon l'une quelconque des revendications précédentes, **caractérisé en ce que** le dispositif (10) comprend une base de machine (12), dans lequel le système d'équipement (14), le logement (16), le dispositif de préhension (22) avec un premier système d'orientation (26), le logement de noyau statorique, le système de torsion (40) et un deuxième système d'orientation (38) sont disposés sur la base de machine (12).

15. Procédé pour équiper un noyau statorique (24) de pièces conductrices (20), de préférence d'épingles à cheveux, qui sont réalisées en particulier avec une section transversale conductrice rectangulaire, dans lequel le procédé comprend les étapes suivantes :
l'équipement d'un logement (16) de pièces conductrices (20) au moyen d'un système d'équipement (14) dans une configuration qui correspond à une configuration des pièces conductrices (20) prévue pour l'insertion dans un noyau statorique (24), dans lequel les pièces conductrices (20) sont disposées dans la configuration prévue dans le logement (16) dans des dispositions en rangée étendues radialement ;
le placement d'un dispositif de préhension (22) au-dessus du logement (16) et des pièces conductrices (20) disposées dans le logement (16),
la préhension des pièces conductrices (20) retenues dans le logement (16) dans une disposition définitive prévue pour l'insertion dans le noyau statorique (24) au moyen d'un système d'orientation (26) et d'un système de contre-appui (28),
le prélèvement des pièces conductrices (20) dans une disposition définitive prévue pour l'insertion dans le noyau statorique (24) du logement (16) par le dispositif de préhension (22),
le déplacement du dispositif de préhension (22) et des pièces conductrices (20) fixées dans celui-ci au-dessus du noyau statorique (24),
l'insertion partielle des pièces conductrices (20) dans le noyau statorique (24) par le dispositif de préhension (22),
la libération de la préhension par le système d'orientation (26) et le système de contre-appui (28), de sorte que les pièces conductrices (20) sont retenues uniquement par le noyau statorique (24),
l'insertion des pièces conductrices (20) dans le noyau statorique (24) jusqu'à la profondeur d'insertion finale,
l'orientation des pièces conductrices (20) au moyen d'un deuxième système d'orientation (38) au-dessous du noyau statorique (24)
et ensuite
la torsion des extrémités des parties branches des pièces conductrices (20) en forme d'épingles à cheveux opposées aux parties de liaison au moyen d'un système de torsion (40), qui se trouve au-dessous du deuxième système d'orientation (38), dans lequel un dispositif (10) selon l'une quelconque des revendications 1 à 14 est utilisé pour la mise en œuvre du procédé.

16. Procédé selon la revendication 15, **caractérisé en ce qu'**avant la préhension par le dispositif de préhension (22) les pièces conductrices (20) sont orientées à l'intérieur du logement (16) au moyen d'une pince initiale (18) dans une étape de procédé supplémentaire.
